# EUROPEAN PATENT SPECIFICATION

(11) **EP 2 058 799 B1**
(45) Date of publication and mention of the grant of the patent: **05.01.2011**
(21) Application number: 07021421.8
(22) Date of filing: 02.11.2007
(51) Int. Cl.: G10L 15/02

(54) **Method for preparing data for speech recognition and speech recognition system**
Verfahren zur Vorbereitung von Daten zur Spracherkennung und Spracherkennungssystem
Procédé de préparation de données pour reconnaissance vocale et système de reconnaissance vocale

(43) Date of publication of application: 13.05.2009
(73) Proprietor: Harman Becker Automotive Systems GmbH, 76307 Karlsbad (DE)
(72) Inventor: Wirsching, Günther, 85072 Eichstätt (DE); Kölbl, Christian, 94151 Mauth (DE)
(74) Representative: Bertsch, Florian Oliver

(56) References cited:
- US-A- 5 502 790
- US-B1- 6 629 073
- US-B1- 7 062 436
- SOREN KAMARIC RIIS ET AL: "Multilingual Text-To-Phoneme Mapping" EUROSPEECH 2001, SCANDINAVIA, vol. 2, 3 September 2001 (2001-09-03), - 7 September 2001 (2001-09-07) page 1441, XP007004620

## Description

### Field of the Invention

The invention relates to a method for preparing data for speech recognition and to a speech recognition system, in which models are assigned to phonetic strings.

### Background of the invention

Speech recognition systems are today used in a variety of applications. Modern vehicles comprise speech recognition systems for the execution of functions such as the control of a telephone system. Other systems such as computer systems may also comprise speech recognition systems, e.g. for voice operation or for taking a dictation. A voice recognition system may be used to start a particular function such as increasing or decreasing the volume of sound output, or to select and play a song stored in a vehicle multimedia system or a computer system, or to select a name from a phone book list and establish a connection with a person associated with the name by means of a communication unit. The speech recognition system thus has to have access to data in the form of a phone book list, a song list, or a function list or the like. In some systems, these data may be permanently available such as in a vehicle multimedia system with a fixed set of functions. Nevertheless, it is often desirable to add new data for speech recognition. New data may be added by connecting a data source to the system. A data source may be a notebook on which song files and other files are available which are associated with a particular name, e.g. an artist name or a file name, or a mobile phone, on which lists of names and phone numbers or addresses are stored, or any other data carrier such as a memory stick, a CD or a DVD with e.g. sound files associated with a song title and an artist. Commands referring to these data that have just come on line now have to be recognized by the speech recognition system, e.g. to play a song from the CD that was just inserted, or to connect to a person whose name and number are stored on a mobile phone that was just connected.
Accordingly, the data that has just come on line has to be prepared for speech recognition. The data may for example be prepared by transcribing the data to phonetic strings and by mapping the phonetic strings to models.

In conventional speech recognition systems rather crude methods are used to map phonetic strings to model sequences of e.g. hidden Markov models (HMMs). In conventional systems, a set of rules, e.g. 1000, for modelling certain phonetic sequences with HMMs is used. Each rule of the set of rules is applied to a phonetic string, which causes the phonetic string to change. The set of rules may be applied multiple times to the phonetic string. Such a process is rather slow and causes performance problems. Conventional methods for mapping phonetic strings to HMM sequences have in particular the disadvantage that they slow down when used for multi-lingual speech recognition, e.g. since an even larger number of rules has to be applied to the phonetic string. Yet especially in situations, where new data is added to a speech recognition system, multi-lingual speech recognition is of importance. Examples are address lists comprising names or addresses of persons living in a foreign country or lists of songs and song titles originating from different countries. Due to the performance problems conventional systems require a long time to prepare the data for speech recognition. Furthermore, model sequences generated by conventional systems only poorly model the phonetic strings, e.g. without left/right context of the phonetic characters, resulting in a poor speech recognition performance of conventional systems. That way a user may be prevented from using the speech recognition system, e.g. when he wants to select a song from a CD which he has just inserted.

US 5,502,790 discloses a method of preparing data for speech recognition according to the preamble of claim 1.

### Summary of the Invention

Accordingly, there is a need to reduce the time required to prepare data for speech recognition in a speech recognition system and to enable reliable speech recognition.

This need is met by the features of the independent claims. The dependent claims refer to preferred embodiments of the invention.

According to the invention, a method is provided for preparing data for speech recognition, the data being provided in the form of a phonetic string, wherein the phonetic string is modelled with a sequence of models by processing the phonetic string comprising at least one character characterwise. The processing of a character comprises checking for at least one phonetic string segment comprising said character if a model exists for said phonetic string segment in a set of rules associating phonetic string segments with models, and if a model exists for a checked phonetic string segment, assigning said model to a character comprised in said phonetic string segment if no longer model is already assigned to said character, wherein the models assigned to the characters form a model sequence representing the phonetic string. The set of rules comprises bridge rules that associate a phonetic string segment with an empty model.

A phonetic string segment is a part of the phonetic string, e.g. if the phonetic string is "abcde", a phonetic string segment could be "abc" or "cd" or others. Preferably, a number of phonetic string segments are checked for each character in the phonetic string.

According to one embodiment, for each character phonetic string segments of increasing length are checked, starting with a segment comprising only the character itself, with segments of increasing length being formed by extending the segment with the next character in the phonetic string, until no model is found for the segment or the end of the phonetic string is reached. For example in the above phonetic string, when the character "b" is processed, the phonetic string segments "b", "bc", "bcd" etc. are checked until no model is found for the phonetic string segment or until the end of the phonetic string is reached. Yet in other embodiments, the string segments may be formed in a different way, e.g. by forming string segments with characters preceding the processed character, or adding characters on both sides of the processed character, or any other suitable way of forming string segments comprising the processed character. Preferably, the phonetic string is processed starting with the first character and continuing by processing the following characters one after the other, yet one may also start with the last character or with any character of the phonetic string.

According to an aspect of the invention, it is checked in a set of rules associating phonetic string segments with models if a model exists for a phonetic string segment. The rules may for example be stored in a file, and for a string segment the file is searched using a search algorithm for whether a rule exists for the particular phonetic string segment. A rule associates the phonetic string segment with a model. Generally, if a rule exists for a phonetic string segment, a model also exists for said phonetic string segment, said model being referenced in said rule. If searching the set of rules for a phonetic string segment yields a model for said phonetic string segment, the model is assigned to a character of the phonetic string segment. Said character may be any character of the phonetic string segment. Preferably, the rule designates the character of the phonetic string segment to which the model is to be assigned. E.g. in the above example if the character "b" is processed, a model may be found for the phonetic string segment "bcd", wherein the model is assigned to the character "c". Yet a longer model may already have been assigned to the character "c", such as a model for "abcd". In that case the model for "bcd" is not assigned to the character "c", as a longer model is already assigned to said character. This has the advantage that always the longest model found for a character is assigned to said character. A longer model in this context means that the model is associated with a longer phonetic string segment. The model for "abcd" is thus longer than the model for "bcd".

Preferably, a rule and thus a model will exist for each phonetic character in the set of rules. In an embodiment where each character in the string is processed starting with the character itself as a phonetic string segment, a model will then be found for each character of the phonetic string. Accordingly, a sequence of models is obtained representing the phonetic string. The characterwise processing of the string is fast compared to conventional methods, in which all the rules are applied to the phonetic string. With the method of the present invention new data which is added to a speech recognition system such as names and addresses and which is provided in the form of phonetic strings can be modelled with a sequence of models in a fast and reliable way. As the method prefers the longest available model for a character, characters can be modelled in their left and right context, thus increasing the quality of the model sequence and therefore enhancing speech recognition. By assigning models to phonetic string sequences with the above-described method larger data volumes can be prepared for speech recognition in a short amount of time, as a result of which speech recognition becomes possible in a number of situations where it was not possible in conventional systems, such as directly after inserting a CD into a navigation system or a multimedia system, or adding data from a phone book to a communication system.

According to an embodiment, a model is associated with a central character in the set of rules, wherein of the models found for phonetic string sequences comprising a particular character the longest model associated with a central character corresponding to said particular character is assigned to said particular character with the phonetic string "abcde" and three rules for the central character "d" in the set of rules, e.g. for the phonetic string segments "cde", "cd" and "d", the longest of the models is assigned to the character "d", in this case the model for "cde". Again, a longer model corresponds to a longer phonetic string segment. If a model is found for a longer phonetic string segment, the model is generally longer than a model for a shorter phonetic string segment. Thus, triphone models associated with three characters are preferred over monophone models associated with only one character for modelling a central character. Preferring the longer models has the advantage that the central character is modelled in its left and/or right context. Models for phonetic string segments comprising two, four or more characters may also exist, yet they are generally less frequent than monophone or triphone models.

According to another aspect of the invention, model tags designate the models in the set of rules, wherein a model tag for a model assigned to a character is stored in a model string at a position corresponding to the position of the character in the phonetic string in order to obtain a string with a sequence of model tags representing the phonetic string. In the set of rules the models may for example be designated with a model tag in the form of a number or a pointer to the model, whereas the model itself is stored in another location. The model tags may also be stored in an array or table or the like, as long as it remains clear which model is assigned to which character. Storing the models in a separate string has the advantage that it can be easily checked whether a model already exists for a character, and said model can easily be substituted with a longer model. Using model tags has the advantage that they are easy to handle, and since they are compact, processing of the phonetic string is facilitated and sped up, and the model string is kept at a compact size. Preferably, the models comprise hidden Markov models. Hidden Markov models are well-known to a person skilled in the art and shall thus not be explained in greater detail at this point. They generally consist of hidden states with transition probabilities between the states and emission probabilities for the emission of an observable from a particular state. Elementary hidden Markov models (HMM) for monophones may consist of three to four states. Yet HMMs may also consist of more states. Using hidden Markov models has the advantage that they generally enable reliable speech recognition. HMMs may be provided for monophones, triphones and other phonetic string segments. The HMMs may be referenced by a model tag, e.g. a pointer, and the characterizing features of the model such as the transmission or emission probabilities may be stored on a data carrier or in a computer memory which can be accessed using the pointer or any kind of tag. More than 6000 HMMs may for example be provided for multi-lingual speech recognition.

According to the preferred embodiment of the present invention, the set of rules comprises bridge rules that associate a phonetic string segment with an empty model, wherein bridge rules are provided for phonetic string segments that occur when going from a shorter phonetic string segment associated with a model to a longer phonetic string segment associated with a model by adding single characters. This means that if a short model, e.g. for a three characters string segment, exists, and a longer model, e.g. for a five characters string segment, exists, the longer segment comprising said shorter segment, a string segment of four characters length may be formed by adding a character to the short string segment, so that by adding another character the longer segment is obtained. The four character string segment may be called an intermediate string segment. With the phonetic string "abcde" and a model for "bc" and "bcde" one can go from the shorter string segment "bc" to the longer string segment "bcde" by adding the characters "d" and "e". So the intermediate phonetic string segment "bcd" occurs when going from the shorter phonetic string segment to the longer phonetic string segment. Accordingly, a bridge rule for this phonetic string segment "bcd", which associates that phonetic string segment with an empty model, may thus be provided in the set of rules. If the phonetic string is processed characterwise by extending a string segment with the next character in the phonetic string until no model is found, the processing of a character may be stopped even if a longer model exists, if a gap exists between a shorter model and a longer model. In the above example, without the bridge model no model would be found for the string segment "bcd", and processing of the character "b" would be stopped. Yet with a bridge model, a model is found and processing continues, and accordingly the model "bcde" is found. This has the advantage that the string can be processed characterwise, yet longer models are still found. The bridge rule associates a string segment with an empty model. Preferably, only models that are not empty models are assigned to characters. Assigning empty models to characters would hinder speech recognition. It is thus an advantage not to assign empty models to characters. If a set of rules with longer and shorter models is provided, bridge rules may be easily generated automatically. They may thus be generated for existing sets of rules. Bridge rules enable the fast characterwise processing of a phonetic string, while longer models are still found, leading to reliable speech recognition.

According to an embodiment of the invention, the method further comprises the step of pre-processing the phonetic string before the characters in the phonetic string are processed. The phonetic string is thus changed before models are assigned to it, whereby the assignment of models can be made more robust and reliable. Preferably, pre-processing the phonetic string comprises the step of analyzing the phonetic string for language tags and, if a language tag is found, providing a set of rules associated with the language tag. In today's multimedia applications multiple languages are often used. For example in an audio system songs which have German or English or even mixed titles may be played back. In order to control the audio system using speech recognition, the song titles are provided in the form of phonetic strings. Such a phonetic string may contain a language tag indicating the language of the phonetic string, or a change of language within the phonetic string. Different languages use different pronunciations and accordingly different phonetic characters and HMM models are provided. Different sets of rules for the association of phonetic string segments with models may be provided for different languages. By searching the phonetic string for a language tag and identifying the language, the appropriate set of rules may then be used for processing the phonetic string characterwise. If two languages separated by a language tag are comprised in a string, the first part may be processed characterwise, whereas after the language tag a different set of rules corresponding to the second language may be loaded, and the second part of the phonetic string may be processed using the second set of rules. This way a sequence of models can be found that models the phonetic string in a reliable way, even if multiple languages are used. Language tags may for example be added by a transcription unit transcribing a song title or any other type of data into a phonetic string. Processing a multilingual phonetic string this way is furthermore very fast.

According to another aspect of the invention, the pre-processing of the phonetic string comprises the step of substituting or deleting predetermined characters in the phonetic string. Such characters may for example be prosody characters. A phonetic string generated e.g. by a transcription process may contain prosody characters, separator characters and other characters. These characters may have to be deleted or substituted in order to enable a reliable modelling of the phonetic string. The string may for example be searched for prosody characters, and prosody characters found may be deleted or may be substituted. For this purpose, a set of rules may be provided containing rules for the deletion of characters and the substitution of characters. For example the character "|" indicating that a new syllable starts may be deleted. Preferably, prosody characters are either deleted or substituted according to said set of rules.

According to another embodiment of the invention, the step of pre-processing the phonetic string comprises the steps of identifying separators in the phonetic string and storing their string positions. String positions may for example be stored in an array in the working memory of the speech recognition system. Separators in the phonetic string may indicate the start and the end of the phonetic string, the start and/or the end of a word or a syllable in the phonetic string or the like. Preferably, separators are located at the start and the end of syllables. Storing the separator positions has the advantage that they may be used for identifying whole words in the phonetic string. According to another aspect of the invention the method further comprises the step of assigning whole-word models to phonetic string segments comprised in the phonetic string. Whole-word models are models that not only model a monophone or a triphone, but a syllable or a whole word. A whole-word model may for example be a HMM model with more hidden states compared to a HMM model for a monophone. It is advantageous to use whole-word models, since a whole-word model models a spoken word better than a sequence of monophone models. The reason for this is that in a whole-word model the particular pronunciation of the word can be accounted for. As a result, the use of whole-word models improves the success rate for speech recognition. Whole-word models may be assigned to phonetic string segments by processing the phonetic string characterwise, and by comparing for each character phonetic string segments to a set of whole-word rules. This set of whole-word rules associates whole-word models with phonetic string segments and may comprise a plurality of bridge rules, so that longer whole-word models are found when phonetic string segments of increasing length are checked for the existence of models. Preferentially, phonetic string segments between identified separators are searched for whole-word models. As words are generally separated by the above-mentioned separators in a phonetic string, it is advantageous to know the positions of the separators in the phonetic string when searching for whole-word models. Model tags designating the whole-word models may be stored in a variable or in an array or the like for the models found. At a later stage, e.g. after a sequence of models has been found for the phonetic string, the whole-word models may be substituted into the sequence of models. In order to perform this substitution, it is also advantageous to know the string positions, e.g. the separator positions, inbetween which the whole-word model is to be inserted.

Preferably, a phonetic string is first searched for language tags, then the positions of separators in the string are identified, after which predetermined characters in the phonetic string are deleted or substituted, followed by the assignment of whole-word models to phonetic string segments. It should be understood that these steps may also be performed in any other order, and that all these steps are optional.

According to another aspect of the invention, characters in the phonetic string are substituted according to predetermined rules before the characters in the phonetic string are processed. This transcription may be called phonetic-to-pseudo-phonetic (p2p). The phonetic string may for example be a speech assessment methods phonetic alphabet (SAMPA) string.

In SAMPA, a monophone may be in the form of two American standard code for information interchange (ASCII) characters. Using the predetermined rules, these two ASCII characters may be substituted by a single character, so that a monophone corresponds to a single character. Preferably, the predetermined rules comprise rules for the substitution of SAMPA monophones having the form of two ASCII characters by one unicode transformation format (UTF-8) character and/or for the substitution of SAMPA diphthongs by one UTF-8 character. Similarly, characters that are of a language other than the loaded language may be substituted according to the predetermined rules. A phonetic string may for example contain a single word from another language, such as a foreign word, which may result in the phonetic string containing SAMPA characters of the foreign language. Yet these foreign words may be pronounced in the currently processed language, so that a substitution of the foreign characters is an advantage and enhances the speech recognition of these words. Preferably, the phonetic string is processed twice this way using two sets of rules for the substitution of characters. Processing the string twice has the advantage that characters are reliably substituted, and a phonetic string is obtained which is suitable for characterwise processing in order to find a sequence of models.

During the substitution of characters the phonetic string may become shorter, as two ASCII characters may be substituted by one UTF-8 character. As a result, the positions where words start and end may change in the phonetic string. Therefore, the string positions of the separators that may have been previously stored are adjusted so that they still represent the start and the end of syllables or words in the phonetic string. This ensures that whole-word models can be inserted at the appropriate positions at a later stage.

According to an embodiment of the invention, the method further comprises the steps of providing the data in the form of a text string and transcribing the text string to the phonetic string. When new data is added to a system, e.g. a navigation system, a multimedia system or the like, the data is generally provided in the form of text strings. Such text strings may be file names, file information, location names and the like. These text strings may then be transcribed into phonetic strings, which are subsequently processed characterwise in order to find a sequence of models modelling the phonetic string. Preferably, the text string is transcribed into a SAMPA string. Methods of transcribing text strings into phonetic strings are well-known to a person skilled in the art and are thus not discussed in greater detail. Transcribing a text string into a phonetic string and modelling the phonetic string with a sequence of models, preferably HMM models, has the advantage that the text string is this way prepared for speech recognition. With the described method a plurality of text strings can be prepared for speech recognition in a relatively short amount of time. Preferably, the method further comprises the steps of recognizing spoken language by detecting an utterance of a person, deriving a sequence of feature vectors from the detected utterance and finding a model sequence least distant from said sequence of feature vectors, wherein by finding said model sequence speech is recognized. If a plurality of text strings is provided and prepared for speech recognition, a plurality of model sequences is obtained. A particular sequence of feature vectors extracted from a detected utterance is emitted by a model sequence with a particular probability. An algorithm such as a Viterbi algorithm is then used to find a model sequence that has the highest probability of emitting the derived feature vector sequence. This model sequence is the least distant, i.e. best-fitting model sequence. The model sequence corresponds to a text string, and accordingly the text string is recognized as the utterance of the person. A model sequence may also be a combination of a number of model sequences corresponding to a number of text strings, yet a model sequence may also only contain a single model, e.g. when the text string contains one word for which a whole-word model exists. Examples for such words are "start", "stop", or "please", as well as numbers and the like. Deriving a sequence of feature vectors from a detected utterance and finding a model sequence least distance from a feature vector sequence are processes that may be implemented in different ways, and a plurality of such ways are known to a person skilled in the art. In the presently described embodiment, new data can be added to the system, the data is prepared for speech recognition and an utterance of a passenger comprising a word comprised in the data is recognized by the system. If the method is used in a vehicle communication system, a passenger may add the contents of his phone book from e.g. a mobile phone to the system, whereafter he will be able to access the phone book by speech, e.g. he may call a particular person from the phone book or may enter the address of a particular person into a navigation system. As with the method of the invention the preparation time of the data for speech recognition is very short, speech recognition can be started immediately after the data was added to the system by the user. This makes the system very useful, as users generally want to access their data immediately.

Furthermore, a speech recognition system is provided comprising a data providing unit providing data in the form of a phonetic string comprising at least one character, a set of rules associating phonetic string segments with models, a compiling unit for modelling the phonetic string with a sequence of models, wherein the compiling unit is formed so as to process the phonetic string characterwise. The processing of a character comprises checking for at least one phonetic string segment comprising said character if a model exists for said phonetic string segment in the set of rules, and if a model exists for a checked phonetic string segment, assigning said model to a character comprised in said phonetic string segment if no longer model is already assigned to said character, wherein the models assigned to the characters form a model sequence representing the phonetic string. The phonetic string may be a text string which was provided by a data source and transcribed using e.g. a transcription unit. The data source may for example be a CD, a DVD, a memory stick, a memory of the mobile phone, or any device capable of providing data in the form of a text string. The set of rules may for example be stored in a file on a data carrier comprised in the system or external to the system, or it may be stored in a working memory of the system, it may also be provided over a wireless connection or in any other way suitable of providing such a set of rules. Preferably, each character of the phonetic string is processed in the compiling unit by checking string segments of increasing length, e.g. by first taking the character itself as string segment and then increasing the string segment with characters subsequent to said character in the phonetic string. In the set of rules, a rule that associates a string segment with a model is also associated with a character of the string segment called central character. Preferably, each model found for a segment of the phonetic string is assigned to the character of the segment corresponding to the central character associated with the model. If a model is already assigned to said character and the model found is shorter than the already assigned model, then the model found is not assigned to the character. This has the advantage that the longest model found for a particular character is assigned to said character. By assigning a model to each character, a model sequence is obtained representing the phonetic string. Such a speech recognition system has the advantage that the preparation of the provided data for speech recognition is very fast and reliable.

According to the preferred embodiment of the present invention; the set of rules comprises bridge rules that associate a phonetic string segment with an empty model, said rules being provided for intermediate phonetic string segments. As mentioned above, an intermediate string segment is a string segment that occurs when going from a shorter phonetic string segment associated with a model to a longer phonetic string segment associated with a model by adding single characters. The shorter string segment is comprised in the longer string segments, and the longer string segment can be obtained by adding characters to the shorter string segment. If there is at least a two character difference between the shorter and the longer string segment, for each of which a model exists, intermediate string segments occur, for which bridge rules are provided. Preferably, if a bridge rule is found for a string segment, the empty model is not assigned to a character. Using these bridge rules enables a characterwise processing of the phonetic string, while models for longer string segments are still found. The bridge rules are thus a kind of forwarding to longer models.

The speech recognition system may further comprise a pre-processing unit for pre-processing the phonetic string. Pre-processing may comprise the identification of language tags in the phonetic string and loading of respective sets of rules for the language corresponding to the language tag, analyzing the phonetic string for separators and storing the separator positions, and substituting or deleting predetermined characters in the phonetic string. The pre-processing unit prepares the phonetic string for a characterwise processing. It loads the appropriate language, identifies the positions of syllables or whole words, and removes unnecessary characters. Furthermore, the speech recognition system may comprise a whole-word processing unit for assigning whole-word models to phonetic string segments comprised in the phonetic string. The assignment may occur according to a set of rules comprising whole-word rules, which are rules that associate a word in the form of a phonetic string or string segment with a model. The phonetic string may be searched for string segments for which whole-word models exist by e.g. processing the phonetic string characterwise and using bridge rules for forwarding to the longer whole-word models. This search may for example be performed between the separators, which may have been identified in the pre-processing unit.

The speech recognition system may furthermore comprise a p2p transcription unit substituting characters in the phonetic string according to predetermined rules. Preferably, two sets of rules are provided, and the string is processed twice in the p2p transcription unit. By using the p2p transcription unit, a phonetic string is provided that is well prepared for being processed characterwise in order to find models for the characters comprised in said string. To achieve this, monophones in the form of two characters in the original phonetic string are substituted by only one character, e.g. a UTF-8 character. Also, diphthongs may be substituted by a single character. These substitutions make the modelling of the phonetic string and a later speech recognition much more robust and enhance the success rate. The rules for the character substitution may for example be implemented as jump tables. For each character in the string it is checked whether a rule exists in the jump table, and if a rule exists, the rule is applied. As two characters may be substituted by one, the previously determined positions of the separators are adjusted accordingly.

The speech recognition system may furthermore comprise a rule-file providing the set of rules. The set of rules comprises the rules associating phonetic string sequences with models. The rule-file may be stored on a data carrier, or in the memory of the speech recognition system, or may be provided over a hard-wired or wireless connection. As such, the rule-file may be provided over the internet, and may thus be frequently updated. The speech recognition system may further comprise a rule-file for providing a set of rules for a p2p transcription and/or for a whole-word processing and/or for a pre-processing of the phonetic string. Four separate rule-files may for example be provided, yet the sets of rules for different steps may also be provided in a single rule-file. It should be understood that these sets of rules are optional, only the set of rules associating the phonetic string segments with models is required.

According to an embodiment of the invention, the speech recognition system further comprises a microphone and a recording unit for recording a speech signal, a speech compiling unit for extracting a feature vector sequence from the speech signal, a processing unit for finding a model sequence which has the highest probability of generating the derived feature vector sequence, and a controlling unit for executing a function associated with the data to which the model sequence found is assigned. One or more microphones may for example be placed inside a vehicle. If a passenger gives a voice command, the passenger's speech is recorded by the microphones and a feature vector sequence is derived from the recorded speech signal. A feature vector may for example be obtained by digitizing the speech signal, dividing the digitized signal into frames and for a frame, band pass-filtering the digitized signal and calculating a cepstrum. Analysis of the cepstra may yield Mel frequency cepstral coefficients, and these and derivations thereof may be comprised in a feature vector. Other coefficients such as linear predictive coefficients may also be used in a feature vector. There are several methods of extracting feature vectors from a recorded speech signal known to a person skilled in the art, and it is not important which of these methods is used. The processing unit may use an algorithm such as the Viterbi algorithm for finding a model sequence or a combination of model sequences which has the highest probability of emitting the derived feature vector sequence. Preferably, the models are HMMs that associate hidden states with emission probabilities for the emission of a particular feature vector. Note that a model sequence may also only contain one model. The model sequences are associated with the data, e.g. text strings, to which they were assigned. By finding the most probable model sequence or combination of model sequences, the data, e.g. a text string or a combination of text strings is identified, which corresponds to the utterance of the person. The identified data is then supplied to a control unit, which interprets it and may execute a function if the identified data contains a command for executing a function. The data may for example contain the text string "increase volume", as a result of which the control unit increases the audio volume of a vehicle multimedia system. It should be clear that the system is not limited to vehicle electronic systems, it may also be used in home multimedia systems, general communication systems, personal computers, PDAs, mobile phones and the like. Accordingly, a plurality of different functions may be executed by the control unit, such as establishing a telephone connection with another person, entering a destination in a navigation system, selecting a song title and/or track from a CD, DVD or other audio or video source, and the like. The advantage of the speech recognition system is that it is very versatile and that it enables a user to add data to the system which is after only a very short preparation time available for speech recognition. Speech recognition is also very reliable, as in assigning models to the data, longer models, e.g. models with left and right context, are preferred.

The speech recognition system may furthermore be formed so as to perform any of the above-described methods.

Furthermore, a computer program product is provided which can be loaded into the internal memory of a computer, said product comprising software code portions for performing any of the above-described methods when the product is executed. The computer program product may be provided on a data carrier. The data carrier may be in the form of a CD, a DVD, a disk, a memory card or memory stick, or the like, which may be accessed directly or remotely by the speech recognition system. The computer program product may also be provided on a hard drive internal to the speech recognition system, or stored on a hard drive on a server which can be accessed by the speech recognition system through e.g. an internet connection, hard-wired or wireless, or any other connection, such as Bluetooth and the like.

Furthermore, a data carrier is provided for the use with any of the above-described systems, with data being stored on the data carrier, said data comprising rules for the association of phonetic string segments with models and/or whole-word models, said data further comprising bridge rules.

Further advantages of the invention will become apparent from the appended drawings in combination with the detailed description, in which preferred and alternative embodiments of the invention are described.

### Brief Description of the Drawings

Fig. 1 shows a schematic drawing of a speech recognition system.
Fig. 2 shows a flow diagram of a method for preparing data for speech recognition.
Fig. 3 shows a flow diagram of another embodiment of a method for preparing data for speech recognition.
Fig. 4 shows a flow diagram of a method for pre-processing a phonetic string.
Fig. 5 shows a flow diagram of a method of whole-word processing of a phonetic string.
Fig. 6 shows a flow diagram of a method of p2p processing of a phonetic string.
Fig. 7 shows a flow diagram of a method for compiling a phonetic string.
Fig. 8 shows a table illustrating an example of a set of rules associating phonetic string segments with models.
Fig. 9 shows a table illustrating an example of a set of rules for a whole-word processing of a phonetic string.

### Detailed Description

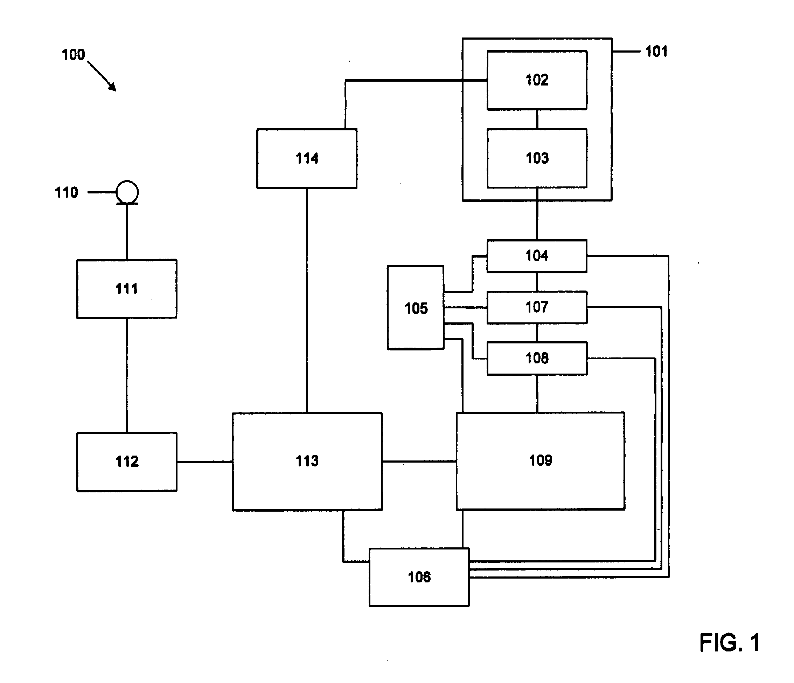

Fig. 1 shows an embodiment of a speech recognition system according to the invention. The speech recognition system 100 comprises a data providing unit 101 providing data in the form of a phonetic string. The data providing unit 101 comprises a data source 102 and a transcription unit 103. The data source 102 may for example be in the form of a CD/DVD drive, a memory card reader, a USB connector to which a USB stick may be connected, a hard drive, a wireless connection or any other means capable of functioning as a data source. If the data source is a navigation CD in a CD drive, it may provide text strings containing location names. These text strings are then transcribed into phonetic strings by the transcription unit 103. Depending on the data source text strings may comprise lists of names, addresses, music titles and the like.

The data providing unit 101 supplies the phonetic string to the pre-processing unit 104. The pre-processing unit checks the phonetic string for language tags and loads a rule-file 105 corresponding to the identified language. The rule-file 105 contains sets of rules for the substitution of prosody characters, whole-word models, p2p transcription and compiling. It is also possible to provide these sets of rules in separate rule-files. The rule-files are stored on storing means internal or external to the speech recognition system 100, such as a hard drive, an internal flash memory, a random access memory, or the like. The pre-processing unit 104 furthermore analyzes the phonetic string for separators. The transcription unit 103 may place separators between syllables or words in the phonetic string. In order to enable a later assignment of whole-word models to whole words or syllables in the phonetic string, the positions of separators in the phonetic string are stored. This is of particular importance for a later insertion of identified whole-word models, as it will have to be known at which position these models are to be inserted. The separator positions are stored on storing means 106, which are preferably in the form of a memory internal to the speech recognition system, such as a random access memory, a hard drive, or an internal flash memory. The pre-processing unit 104 may furthermore delete or substitute predetermined characters in the phonetic string. In order to identify which characters are to be deleted or substituted, the pre-processing unit 104 accesses the rule-file 105. Preferably, the rule-file 105 contains rules for the deletion or substitution of prosody characters. If the pre-processing unit 104 finds a prosody character in the phonetic string, it checks whether a rule exists for the prosody character, and if so, either deletes or substitutes the prosody character. Furthermore, other characters such as separators may be removed in the processing unit 104. If characters are deleted from the phonetic string or if two characters are substituted by one, so that the length of the phonetic string changes, the positions of the separators that were previously stored are adjusted accordingly.

The phonetic string is then supplied to the whole-word processing unit 107. The whole-word processing unit 107 identifies string segments in the phonetic string for which whole-word models exist in a set of rules. The whole-word processing unit 107 may access the rule-file 105 to check whether a whole-word rules exists for a phonetic string segment. The whole-word models that are found for a phonetic string are stored in a variable such as a string or an array in the storing means 106. It is also stored at which positions in the phonetic string these whole-word models are to be inserted. After whole-word models have been identified, the phonetic string is supplied to the p2p transcription unit 108. In the p2p transcription unit 108 the phonetic string is transcribed to a pseudo-phonetic string. This means that characters in the phonetic string are substituted according to predetermined rules. The phonetic string is preferably supplied in the form of a SAMPA phonetic string by the transcription unit 103. In the SAMPA phonetic language, some monophones may be represented as two ASCII characters. For characterwise processing of the phonetic string this is disadvantageous, since one monophone is generally only modelled by one model. Also, foreign language characters are substituted and SAMPA diphthongs are substituted by a single character. Preferably, the characters in the phonetic string are mapped to UTF-8 characters. As the length of the phonetic string may again change, the stored positions of the separators are again adjusted. Preferably, p2p transcription unit 108 processes the phonetic string twice using two sets of rules. The rules may again be provided by the rule-file 105. Alternatively, the rules are provided in jump tables, or only one set of rules is provided for both processing steps. The phonetic string may also be only processed once with one set of rules. After the phonetic string has been processed by the p2p transcription unit 108, it preferentially contains only characters for each of which a model exists in a given set of rules.

The phonetic string is then supplied to the compiling unit 109. The compiling unit 109 processes the phonetic string characterwise. When processing a character, the compiling unit 109 checks for a number of different string segments of the phonetic string comprising the character which is being processed for whether a model exists for the string segment in a set of rules. The set of rules is provided by the rule-file 105. The rules associate phonetic string segments with models which may be designated by a model designator or model tag. The phonetic string segment and the model may be furthermore associated with a central character, which is a character of the phonetic string segment that is modelled by the model. If a model is found for a phonetic string segment, it is assigned to this central character.

For each character in the phonetic string at least a monophone model should exist. If more than one model exists for a character, the compiling unit assigns the longest of the models. After the phonetic string has been processed by the compiling unit 109, a model has been assigned to each character of the phonetic string, with longer models being preferred over shorter models. The models may be assigned to the phonetic string by storing model designators in a separate model string, at positions corresponding to the positions of the character to which the model is assigned. Yet they may also be stored in an array in a field corresponding to the position of the character to which they were assigned in the phonetic string. This model string or array/table of models may for example be stored in the storing means 106. Yet it may also be stored at some other place, for example in some working memory of the speech recognition system 100. As a result, if data is added to the speech recognition system, say in the form of text strings, these text strings are transcribed into phonetic strings to which sequences of models are assigned by the compiling unit 109. That way the data is prepared for speech recognition. When the prepared data is available, speech recognition may start.

In speech recognition, a voice command issued by a person or a text spoken by a person is to be recognized by the speech recognition system. Such an utterance of a person is first recorded by a microphone 110. It is then digitized in the recording unit 111 and supplied to the speech compiling unit 112. In the speech compiling unit 112 the speech signal is analyzed in order to derive features that characterize a speech signal. The speech signal may for example be divided into 5-20 ms long frames, which are then filtered using a range of band-pass filters, e.g. in the range of 150 Hz to 10 kHz. Static and dynamic features are derived from the speech signal, e.g. by calculating MEL-frequency cepstral coefficients and their derivations. Other features such as energy features may also be derived. Each frame is then represented by a feature vector. The utterance of the person now corresponds to a sequence of feature vectors. A model chain has now to be found that best corresponds to the sequence of feature vectors. A model chain may be a model sequence or a combination of model sequences.

The processing unit 113 is supplied with the feature vectors as well as the model sequences that were assigned to the data provided. The processing unit 113 may be directly provided with the model sequences by the compiling unit 109, or it may access storing means 106 in order to obtain the model sequences. It may store the model sequences in an internal working memory. The processing unit 113 now finds a model chain that best represents the sequence of feature vectors. The models are preferably HMMs, which are defined by their initial, transition and emission probabilities. The models may be accessed by model designators, and may themselves be stored in the storing means 106, or at some location internal to the processing unit 113. Yet they may also be stored in some file similar to the rule-file 105, which can be accessed by the processing unit 113. An HMM can take on a certain number of states, each of which emits a feature vector with a particular probability, namely the emission probability. The Viterbi algorithm now searches for a chain of HMMs that emit the provided sequence of feature vectors with a maximum probability. Yet the processing unit 113 may also use any other algorithm suitable for finding a chain of HMMs that best describe the provided feature vector sequence. An HMM chain may consist of a model sequence produced by the compiling unit 109, or a nesting or combination of model sequences. As mentioned before, a model sequence may also only consist of a single HMM.

With finding the chain of models corresponding to the feature vector sequence, the processing unit also identifies the text string or combination of text strings corresponding to the feature vector sequence and thus the utterance of the person. The identified sequence of text strings is supplied to the control unit 114. The control unit 114 interprets the sequence of text strings. For example if the speech recognition system is comprised in a vehicle navigation system, a user may insert a CD with map data of e.g. Germany. The data source, here the CD in the CD drive of the navigation system, then provides a list with location names of Germany to the transcription unit, where the names are transcribed to phonetic strings, to which model sequences are assigned as described above. The user of the navigation system may now issue the command "enter destination Berlin". The sequence of text strings "enter destination Berlin" is supplied to the control unit 114 by the processing unit 113. The words "enter" and "destination" may not have been supplied on the CD, they may be part of a basic vocabulary of the speech recognition system. The control unit 114 recognizes the command sequence "enter destination" and then accesses the data source 102 in order to find the destination "Berlin". It may then enter the city of Berlin as a destination in the vehicle navigation system. In another example, the data source 102 is a mobile phone or personal data assistant (PDA) on which names, telephone numbers and addresses are stored. A command issued by a user may for example be "call Simon". The name "Simon" may be stored on a mobile phone and is associated with a telephone number. After the list of names and addresses provided by the data source 102 in form of the mobile phone has been prepared for speech recognition, processing unit 113 can recognize the command issued by a person. As a result, the control unit 114 receives the recognized strings "call" and "Simon". Again, the command "call" may be part of a standard vocabulary of the speech recognition system. The control unit 114 interprets the command "call" and then accesses the data source 102 in order to search for the name "Simon" and the telephone number associated with said name. Finally, the control unit 114 causes a communication system, of which the speech recognition system may be a component, to establish a telephone connection with the telephone number associated with the name "Simon".

In another example, the data source has the form of a USB connector, to which a USB memory stick is connected. The USB memory stick contains a number of audio files. Among others, the memory stick may contain an audio file called "Mozart". Again, the data comprised on the memory stick is prepared for speech recognition as described above. As such, file names may be prepared for speech recognition, or meta information comprised in the files, such as artists, song titles, album names, and the like, may be prepared for speech recognition. A person may now issue a voice command "play Mozart". The word "play" may again be part of a standard vocabulary of the speech recognition system, whereas the word "Mozart" was prepared for speech recognition. Accordingly, the processing unit 113 will recognize both words and supply them to the control unit 114. The control unit 114 now recognizes that the command "play" is aimed at starting the playback of an audio file with the name "Mozart", or an audio file which is associated with the interpreter name or song title "Mozart". The control unit 114 will thus access the data source 102 and find the audio file with the name "Mozart". It will then initiate the playback of said audio file.

The transcription unit 103, the pre-processing unit 104, the whole-word processing unit 107, the p2p transcription unit 108, the compiling unit 109, the speech compiling unit 112, the processing unit 113 and the control unit 114 may be implemented as software code portions, which may be executed by a microprocessor of a computer system. Such a computer system could be implemented in a vehicle navigation or multimedia system, yet it could also be implemented in a mobile phone, in a PDA, in a home personal computer, or any other system which may benefit from speech recognition, e.g. a home entertainment system. On all these systems, new data is added frequently and thus needs to be prepared for speech recognition. Thus, it is very advantageous to use the above-described speech recognition system for this purpose.

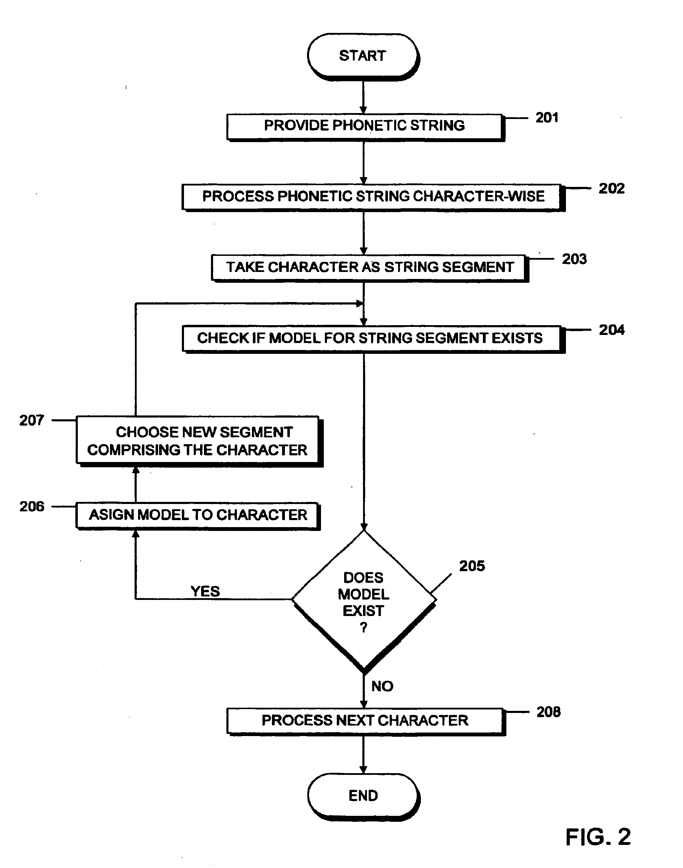

Fig. 2 shows a flow diagram of a method for preparing data for speech recognition. In a first step 201, a phonetic string is provided. The phonetic string may for example be provided by a data providing unit 101. The phonetic string may originate from a text string, such as a file name, a location name or the like, which was transcribed to a SAMPA phonetic string. In the next step 202 the phonetic string is processed characterwise. Preferably, each character in the string is processed. For processing a character, the character is taken as a string segment in step 203. In step 204 it is then checked if a model exists for the string segment in a set of rules. The rules associate string segments with models, preferably HMMs. If a model exists, it is then in step 205 branched to step 206, in which the model is assigned to the character. The model is not necessarily assigned to a character which is being processed, it may also be assigned to a so-called central character, which is a character associated with the model and comprised in the string segment for which the model was found. In the case where a previously found model was already assigned to the character, the model found is only assigned if it is not shorter than the previously assigned model. In the next step 207 a new string segment is chosen again comprising the character being processed. Preferentially, the new string segment is formed by extending the previously checked string segment with a character of the phonetic string preceding or following the checked string segment. It is then continued with step 204, where it is again checked for the newly chosen string segment whether a model exists in the set of rules. If no model exists, the branching point 205 branches to the step 208. In step 208, the next character of the phonetic string is processed. Any character of the phonetic string may be chosen as the next character, yet preferably the phonetic string is processed from left to right, one character after the other. Processing of the next character again starts with step 203. The process ends after a predetermined number or all characters in the phonetic string were processed. Preferentially, the set of rules in which it is checked whether a model exists for a string segment comprises bridge rules. These bridge rules indicate the existence of models for longer string segments. No model may exist for a part of a longer string segment, for which a model exists. A bridge rule is then provided for this part of the longer string segment, so that the model for the longer string segment can be found when the string is processed characterwise. Without bridge models, no model would be found for the part of the longer string segment, and accordingly, the search would be stopped at the branching point 205. A bridge model is thus some kind of forwarding to longer models.

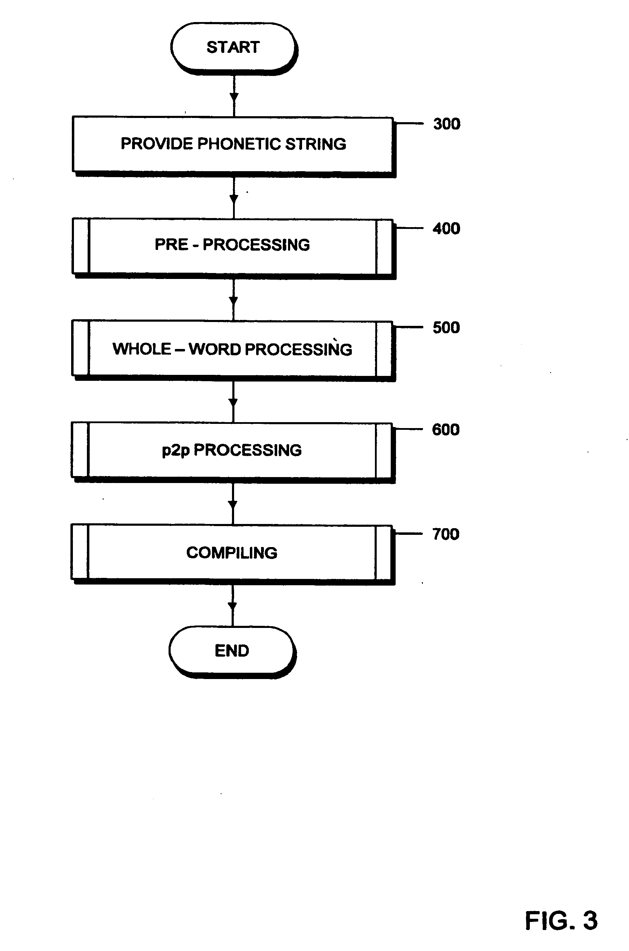

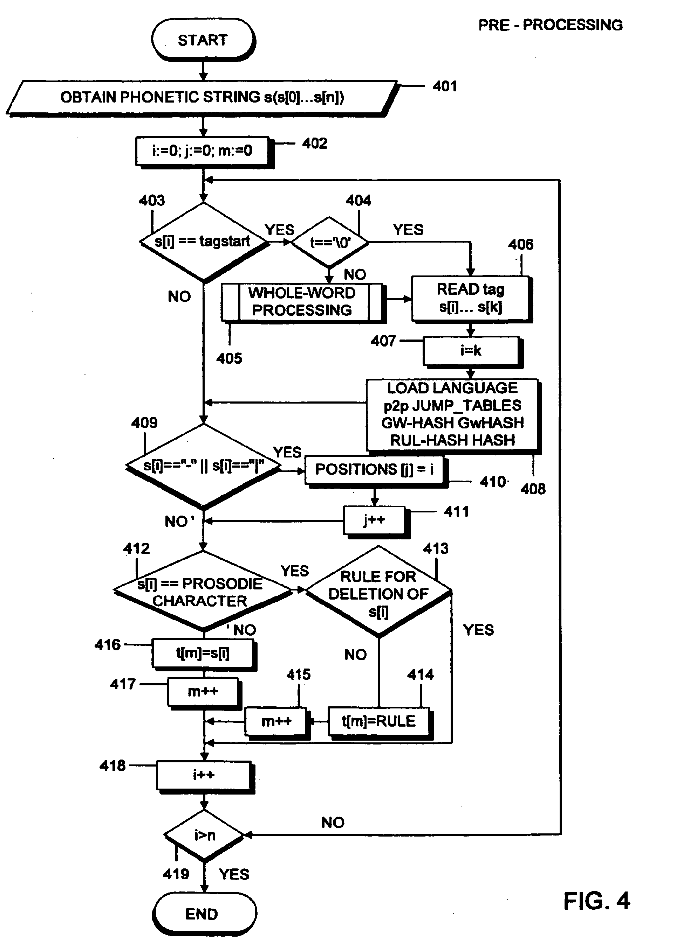

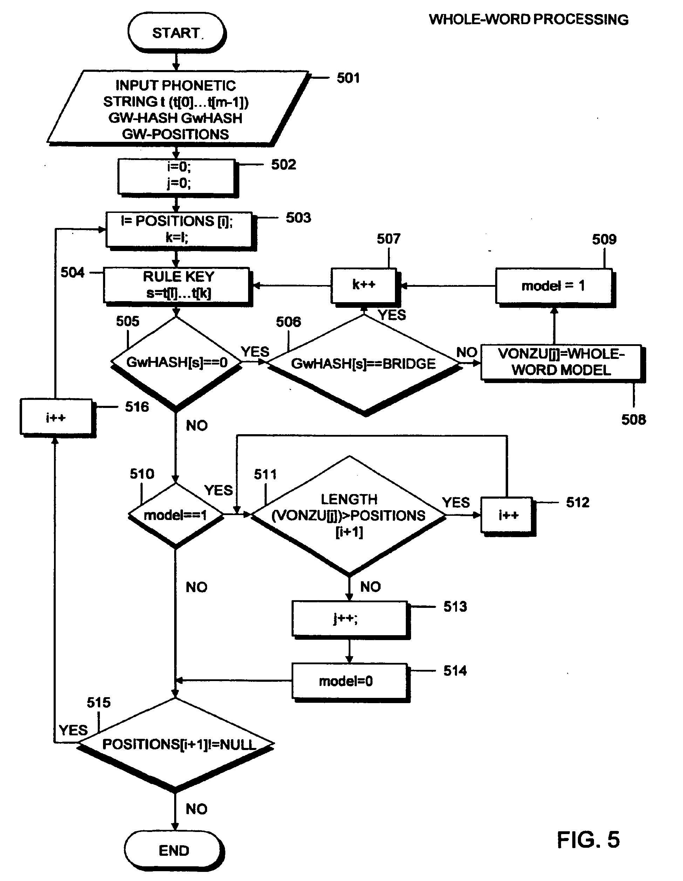

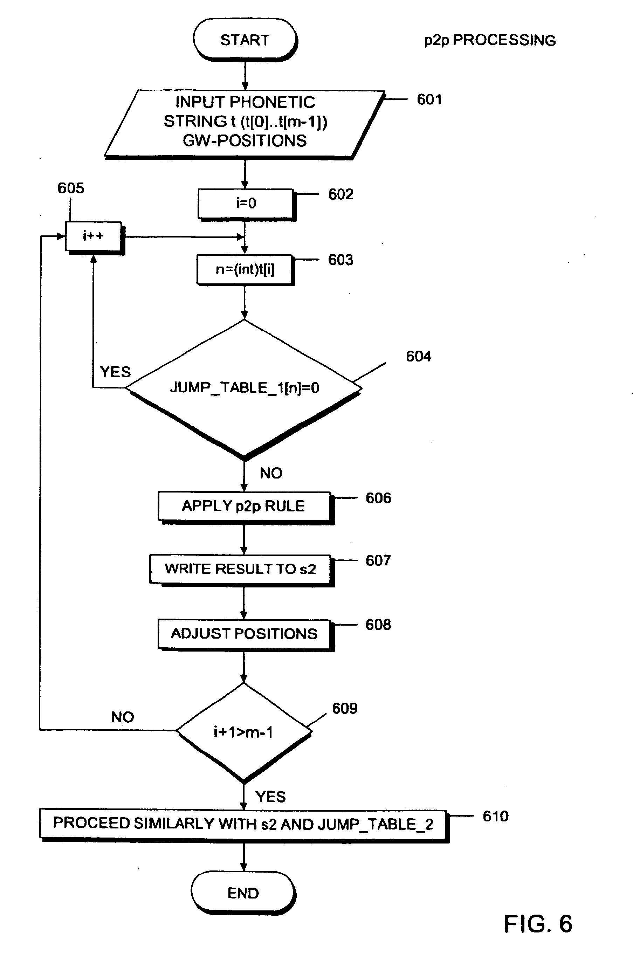

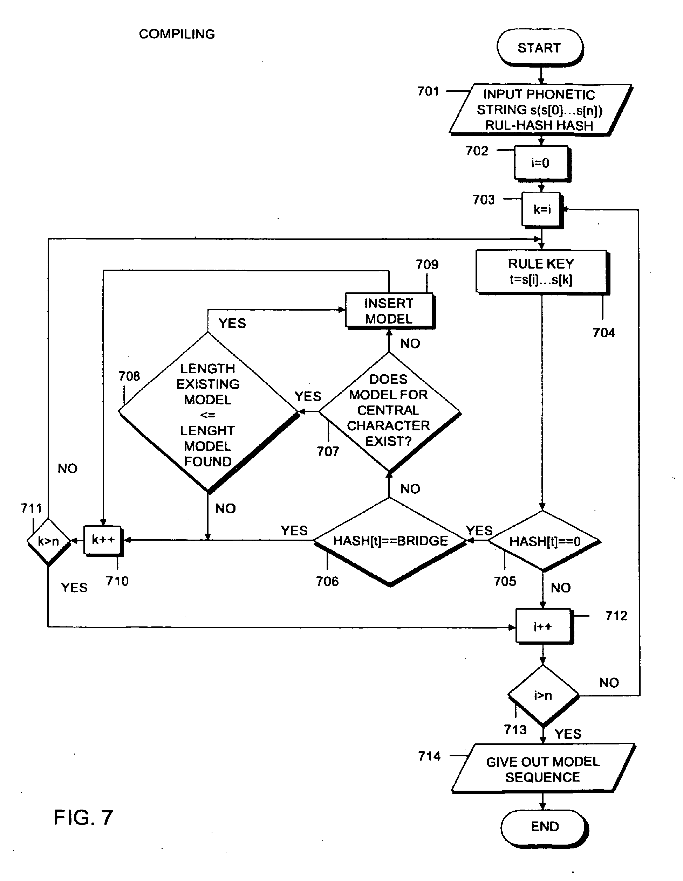

Fig. 3 shows a flow diagram for another embodiment of a method for preparing data for speech recognition. In a first step 300, a phonetic string is provided. Again, the phonetic string may be a SAMPA string generated by transcribing a text string. In a next step 400 the phonetic string is then pre-processed. The pre-processing 400 is a process, an embodiment of which is more closely described in Fig. 4. The pre-processed phonetic string is then in step 500 whole-word-processed. Whole-word processing is a process, an embodiment of which is described in Fig. 5 in more detail. In a next step 600, the phonetic string is p2p-processed. Again, the p2p processing is a process of an embodiment which is described in more detail in Fig. 6. In a next step 700, the phonetic string is compiled. Again, compiling is a process of an embodiment which is more closely described in Fig. 7. With the step of compiling the phonetic string, a model sequence modelling the phonetic string is obtained. Once the model sequence is obtained, the data which was transcribed into the phonetic string is available for speech recognition. A text string associated with a phonetic string and a sequence of models is now on hand, as a result of which the text string can be recognized by a speech recognition system, such as the system 100.

Fig. 4 is a flow diagram of pre-processing a phonetic string. In step 401, the phonetic string s is obtained. The phonetic string contains (n+1) phonetic characters, e.g. SAMPA characters. In a next step 402 the indexes i, j, and m are initialized, meaning they are set to zero. These indexes can take on positive integer numbers. The index i labels the character in the string, i.e. i=0 designates the first character in the string. The index j designates separators, i.e. j=0 corresponds to the first separator. Index m designates characters in a second phonetic string, to which the provided phonetic string s is transcribed. This will be explained in more detail later. The pre-processing of the phonetic string is performed characterwise. Accordingly, a loop is provided in which the index i designating the character in the phonetic string is increased by one each turn. In the decision 403 it is checked whether the character s[i] is a language tag start. The language tag indicates that in the following part of the phonetic string the language associated with the language tag is used. If the checked character is the start of a language tag, then it is first checked in decision 404 whether characters have already been transcribed into the second phonetic string t. If the language tag is found in the center part of the phonetic string s, characters have already been transcribed into the second phonetic string t, and these characters will generally belong to a language other than the language following the language tag. Accordingly, processing of the second phonetic string t is first performed before a new language is loaded. Thus, if decision 404 has a negative answer, meaning that characters are already comprised in a second phonetic string, it is branched to whole-word processing in step 405. This means that the second phonetic string is now supplied to the whole-word processing 500 of Fig. 3, which is in more detail described in Fig. 5. The remaining steps of Fig. 3 are then performed, after which the process continues with the pre-processing of the remaining characters in the phonetic string, with step 406 of Fig. 4. In case the second phonetic string is empty, decision 404 will yield a positive answer and it is directly continued with step 406. In step 406, the whole language tag is read from the phonetic string s. The index i is then set in step 407 to the end of the tag. The tag identifies the language of the following part of the phonetic string. According to the language that was identified by the language tag the appropriate sets of rules are loaded in step 408. These sets of rules may comprise jump tables for p2p processing, whole-word rules (GW-Hash), and rules associating phonetic string segments with models (Rul-Hash). These sets of rules may be provided in a rule-file, or in multiple rule-files. These sets of rules comprise the rules for substituting characters in the phonetic string, identifying whole-word models in the phonetic string, and assigning models to the characters of the phonetic string. The above steps 403 to 408 make it possible that the language is changed within an input string, which is indicated by a predetermined character. In this case, processing of the part of the input phonetic string, which was already transcribed to the second phonetic string, continues. Afterwards, the new language is detected and loaded. The remaining phonetic string (behind the detected language tag to the end or next language tag) is taken as a new input phonetic string, and processing is started over again, e.g. with step 400 of Fig. 3. This has the advantage that a reliable and fast processing of multilingual phonetic strings is provided. Conventional methods for mapping models to a phonetic string slow down when used for multilingual speech recognition.

The first sequence of steps is aimed at identifying the language of the phonetic string and loading appropriate sets of rules.

In the next steps, the positions of characters inbetween which whole-word models are possible are stored. These signs may be called separators. In step 409, it is checked whether the current character s[i] is such a separator, e.g. "-" or "|". If the current character of the phonetic string is such a separator, the position of the separator in the phonetic string, i.e. the index i, is stored in the variable "positions" in step 410. Index "j" designates the separator number. After the separator position was stored, index "j" is increased by one in step 411. The instruction "++" increases the preceding index by one. After "j" has been increased, pre-processing is continued in step 412. If the current character is no separator, pre-processing is directly continued with step 412. In the next step, prosody characters in the phonetic string are processed. In step 412, it is checked whether the current character s[i] is a prosody character. Prosody characters generally describe the emphasis in a phonetic string, e.g. which syllable in the phonetic string has to be emphasized. If the current character is a prosody character, it is checked in step 413 whether a rule for a deletion of the current character exists. If such a rule exists, processing is simply continued. If no such rule exists, the current character, i.e. the prosody character, is transcribed into a second phonetic string t[m] according to a rule. The rule for the deletion of prosody characters or the transcription of prosody characters may for example be stored in a rule-file, such as the rule-file 105. This rule-file may be accessed by the unit which performs the pre-processing. The result of applying the rule to the prosody character is stored in the second phonetic string in step 414, after which the index m designating the characters in the second phonetic string t[m] is increased in step 415. Processing is then continued with step 418. In case the current character is not a prosody character in step 412, the character is directly transcribed into the second phonetic string t[m] in step 416. Alternatively, this transcription may occur according to another set of rules. In the next step 417, the index m of the second phonetic string is increased. Processing then continues in step 418. If characters were deleted or the size of the phonetic string changed during the transcription of the phonetic string s[i] into the phonetic string t[m], the previously stored positions of separators may be adjusted accordingly (step not shown).

In step 418, the index i indexing the characters in the phonetic string s[i] is increased. It is then checked in step 419 whether the increased index i is larger than the variable n, which designates the last character in the phonetic string s[i]. If this is not the case, processing of the next character in the phonetic string is performed, again starting with step 403. If it is determined in step 419 that the increased index i is larger than n indexing the last character in the phonetic string, it can be concluded that the whole string has been pre-processed. Pre-processing is then ended. Now referring back to Fig. 3 the second phonetic string is supplied to the process of whole-word processing, i.e. step 500 which is in more detail explained in Fig. 5. Furthermore, the positions of the separators are supplied to the whole-word processing as well as the loaded sets of rules.

The finding of separators and the processing of prosody characters will be explained with the following example. In the following table, line 1 corresponds to the index i indexing the characters in the phonetic string, whereas the second line corresponds to the characters of a phonetic string.

| | | | | | | | | | | | | |
|---|---|---|---|---|---|---|---|---|---|---|---|---|
| 0 | 1 | 2 | 3 | 4 | 5 | 6 | 7 | 8 | 9 | 10 | 11 | 12 |
| - | \| | ' | ? | a | : | \| | h | a | U | s | \| | - |

In the above phonetic string, the character at position 2 is a prosody character which will be deleted. Note that indexing of the characters starts with 0. Furthermore, the separator positions 0, 1, 5, 10, and 11 are stored, as whole-word models are possible between these positions. Note that in the original string separators are located at string positions 6, 11, and 12, yet since the prosody character was deleted, the positions are adjusted to the positions 5, 10, and 11. Prosody characters may be removed as they mainly influence the energy of a speech signal, yet have little influence on derived feature vectors.

Fig. 5 is a flow diagram showing a possibility of performing a whole-word processing. In whole-word processing the portions between separators in the phonetic string are checked for whole-word models. If a whole-word model is found, it is stored in which portion of the phonetic string it is supposed to be inserted, yet it is not yet inserted but will be inserted later. If more than one model is found for a portion, the longer model, i.e. the model modelling the longer phonetic string segment, "wins". The whole-word models and their rules are stored in a table or a hash. The successive checking of string segments corresponds to searching the hash, wherein the currently observed string segment, which is stored in an auxiliary string, represents the key. If a result is found in the hash, it is either a whole-word model or a bridge model.

In step 501, the second phonetic string t comprising m characters is obtained as an input string. Also the set of rules for whole-word models (GW-Hash), the Rul-Hash and the separator positions (GW positions), which designate the whole-word positions, are obtained. In a next step 502, indexes i and j are initialized, i.e. set to zero. Index i now indexes the separator positions, whereas index j indexes the whole-word models found. In the next step 503, the indexes 1 and k are initialized. They are both set to the position of the first separator, i.e. l=k=positions[i]. Note that indexing starts at 0, i.e. the first separator position is position s[0]. In the next step 504, the auxiliary string or rule key s is formed from the input string t by taking the portion from t[l] to t[k]. It is then checked in step 505 whether a rule exists in the set of whole-word rules (GWHash) for the rule key or auxiliary string. In step 506, it is checked whether the rule found for the auxiliary string is a bridge rule. If this is the case, then the index k is increased in step 507, and a new auxiliary string is formed in step 504, now comprising a larger portion of the input phonetic string t. This is continued until no rule is found in step 505, or it is found that the rule is not a bridge rule in step 506. If the rule is not a bridge rule in step 506, it is a rule associating the auxiliary string with a whole-word model. The whole-word model is then stored in step 508 in a variable called "vonzu[j]", with j indexing the whole-word model. A Boolean variable indicating that a model was found is then set to one in step 509. Index k is then again increased in step 507, and checking of auxiliary strings continued, until no model is found in step 505. In step 510, it is checked whether a model was found in the previous steps, i.e. it is checked whether the Boolean variable "model" was set to one. If a model was found, it is then checked in step 511 whether the model extends beyond the next separator in the phonetic string t. If so, the separator index is increased in step 512, and this is repeated until the current separator is located behind the last found model. Then the model index j is increased in step 513, and the Boolean variable "model" is set to zero again in step 514. Whole-word processing is then continued in step 515. If no model was found, meaning that decision 510 gives a negative answer, processing is directly continued with step 515. In step 515, it is checked whether a further separator position exists. If so, the separator position index i is increased in step 516, and processing continued with step 503. If this is not the case in step 515, all phonetic string portions between separators were processed, and whole-word processing is ended. As a result of the whole-word processing, whole-word models are stored in the variable "vonzu". These will be inserted into a model sequence at a later stage for modelling the phonetic string. Using bridge rules in the GW-hash has the advantage that the portions between separators of the phonetic string can be processed characterwise, with the bridge rules forwarding to whole-word rules/models. Now referring back to Fig. 3, after the whole-word processing 500 is ended, p2p processing 600 of the phonetic string t is started.

Fig. 6 shows a flow diagram for a possibility of carrying out a p2p processing of an input phonetic string. The phonetic string from which the prosody characters were removed is now transcribed according to p2p rules. This is done in two steps. First, trained monophones, which are represented as two ASCII characters in SAMPA, are mapped to one UTF-8 character, and character set corrections are performed (mapping of foreign language characters). Afterwards, SAMPA diphthongs are mapped to one character and trained monophones are evaluated. This transcription is here called phonetic-to-pseudo-phonetic (p2p), since afterwards the phonetic string is not a SAMPA phonetic string anymore.

After the translation of phonetic to pseudo-phonetic it is checked whether all characters in the string were processed. If this is not the case, processing stops at this stage, as an unknown character is present in the phonetic string.

The p2p rules are implemented as pointer arrays or jump tables. It is checked whether a rule exists for the currently processed character by checking the pointer array in the corresponding field for a zero pointer. A zero pointer is a pointer that simply contains the address zero, meaning that it is not initialized. Rules are preferably sorted alphabetically, and by inverse length for each character. Thus, longer rules are found and applied ahead of shorter rules. If rules exist for a character, they are linearly gone through, compared to the input string and, if matching, applied.

In step 601, the phonetic string t and the whole-word positions are obtained as an input. In step 602, the index i indexing characters in the phonetic string t is initialized. In step 603, the currently processed character t[i] is converted into an integer number stored in the variable n. In step 604 it is checked in the set of rules in form of a jump table 1 whether a rule exists for the currently processed character. This is done by checking the field corresponding to the number n in the pointer array (jump table) for a zero pointer. In case of a zero pointer, processing continues by increasing the index i in step 605, and processing the next character in step 603. If the pointer of the currently processed character is not a zero pointer, a rule exists. The rule is applied in step 606. The result is written to a new string "s2" in step 607. As a result of the transcription, the positions of the separators may have changed. Accordingly, the positions are adjusted in step 608. It is then checked in step 609 whether the end of the input phonetic string is reached. If the end is not reached, index i is increased in step 605 and processing is continued with step 603. If it is determined in step 609 that the end of the phonetic string has been reached, the new phonetic string s2 is similarly processed using a second jump table, here designated as "jump_table_2". When processing the phonetic string s2, the results are written in a new phonetic string s3, and the positions of the separators are again adjusted. After step 610, p2p processing is ended. Referring again to Fig. 3, the so processed phonetic string is compiled in step 700.

As an example, a p2p transcription of the above phonetic string "-|?a: |haus|-" will be described below. The following table demonstrates the transcription of characters using pointers of a jump table.

| Character | ASCII | Pointer | Transcription |
|---|---|---|---|
| - | → 45 | → pointer[45] == ZERO → no rule existant | |
| ? | → 63 | → pointer[63] == ZERO → no rule existent | |
| \| | → 174 | → pointer[174] == ZERO → no rule existent | |
| a | → 97 | → pointer[97] != ZERO → a: → Å | |
| etc. | | | |

As can be seen, the SAMPA monophone "a:" which is represented by two characters in SAMPA is transcribed into only one UTF-8 character. After both steps, i.e. the application of both jump tables, the following string is obtained: "-?Åh8s-". As one can see, the length of the phonetic string is reduced. Therefore, the positions of the separator that were previously stored are adjusted accordingly.

Fig. 7 is a flow diagram showing a possibility of compiling a phonetic string in more detail. The phonetic string that is supplied by the p2p processing 600 to the compiling 700 is a phonetic string with n central characters. For each of these central characters, a model has to be found (except for portions with whole-word models). Similar to the rules for whole-word models, the rules may be stored in a hash. The input phonetic string is read sign by sign into an auxiliary string until the hash does not deliver a result anymore. Generally, the hash will at least deliver a monophone model, which models only one character in the phonetic string, i.e. without left or right context. As soon as the hash has found a result, it is stored in the memory at a position corresponding to the position of the central character in the phonetic string. If a model already exists for the central character, the longer of the models is stored.

In step 701, the phonetic string s3 is obtained as an input, which in the following will simply be designated with s[i], with i indexing the characters in the phonetic string. Furthermore, the "Rul-hash" comprising rules associating phonetic string segments with models is obtained. The Rul-hash may for example have been previously loaded, e.g. in step 400 of Fig. 3, into the working memory of the speech recognition system. In the next step 702, index i is initialized. In the next step 703, index k is initialized. k indexes the end of a phonetic string segment in the phonetic string which is currently being processed. In step 704, the currently processed string segment is read into the auxiliary string or rule key t. In the case where both i and k are zero, t will thus simply contain the first character of the phonetic string. In the next step 705, it is checked whether a model or rule exists for the string segment/rule key t. The rules are stored in a hash table, and the search will deliver a result of zero if no rule exists for t. If a rule exists, it is checked in step 706 if the rule is a bridge rule. If the rule is not a bridge rule, it will associate the string segment t with a model. It is then checked in step 707 whether a model was already assigned to the central character, which is associated with the model found in step 705. As mentioned before, a rule associates a phonetic string segment with a model and a central character, that central character being comprised in the phonetic string segment. If a model is found, it will be assigned to this central character, if no longer model was already assigned to the character. If in step 707 it is found that a model was already assigned to the central character, it is checked in step 708 whether the existing/already assigned model is shorter than the newly found model. If that is the case, then the newly found model is assigned to the central character in step 709. If it was found in step 707 that no model exists for the central character, the newly found model is directly assigned in step 709. After assignment of the model, index k is increased in step 710. In step 711 it is checked whether the increased index k extends beyond the length of the phonetic string s, namely n. If this is not the case, then a new string segment is read into the auxiliary string t in step 704. As the index k was increased, the new string segment is one character longer than the previously analyzed string segment. Jumping now back to step 706, if it is found that the model is a bridge model, the model is not assigned to the central character. Instead, it is directly continued with step 710, and thus, if the end of the phonetic string is not already reached, with the analysis of a longer string segment. As can be seen, bridge models forward to longer models. Based on the character s[i], string segments of increasing length are checked for models, until no model is found in step 705. Then index i is increased in step 712. In step 713 it is then checked whether the index i extends beyond the end of the phonetic string. If that is not the case, processing continues in step 703. As a result, based on the next character in the phonetic string, phonetic string segments of increasing length are again checked for models. Now going back to step 711, if the end of the string is reached by index k, processing of the next character starts by increasing i in step 712, and by resetting k in step 703. If in step 713 it is determined that the last character of the string was processed, the model sequence consisting of the models assigned to the characters of the phonetic string is given out in step 714. At this stage, whole-word models may be inserted into the model sequence at their respective positions. As a result, a model sequence is obtained that models the original phonetic string. Since longer models are preferred, the central characters are modelled in their left and right contexts, if a model for such a context exists. Central characters modelled in their context are better recognized than characters only modelled with a monophone model, as a result of which overall speech recognition is improved.

As an example, the compiling of the input string "-?Åh8s-" will be described below. The input string is processed characterwise, and models are assigned to the central characters of the string according to a set of rules comprised in a hash:
Search_in_Hash("-")=0 → Model for "-" found and inserted
Search_in_Hash("-?")=0 → Empty model found, bridge rule
Search_in_Hash("-?Å")=0 → Model for "?" found and inserted
Search_in_Hash("-?Åh")=1 → No model found, processing of next character
Search_in_Hash("?")=0 → Model for "?" found

A model for "?" has already been found and inserted (in this case a triphone model). It is now checked whether the newly found model for the string sequence ("?") is longer than the already inserted model for the string segment "-?Å". As this is not the case, the newly found model is not inserted.
Search_in_Hash("?Å")=0 → Bridge rule
Search_in_Hash("?Åh")=0 → Model for "Å" found and inserted
Search_in_Hash("?Åh8")=1 → No model found
Search_in_Hash("Å")=0 → Model for "Å" found, but shorter than existing model ... etc.

As mentioned before, inserting a model may be done by storing a model designator or a model tag in e.g. a string or an array at a position corresponding to the position of the central character, which the model models, in the phonetic string. As can be seen from the above example, the model inserted for "?" takes the left and right context into account. As each character may be placed in a large number of contexts, a large number of triphone models is provided, generally more than 1000.

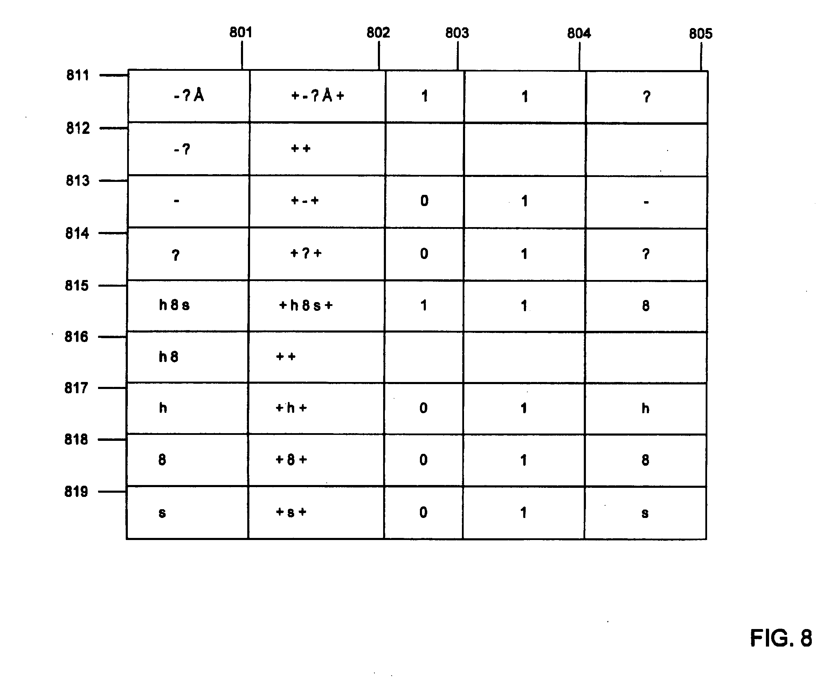

Fig. 8 shows a part of a set of rules that may be comprised in the hash-table used for compiling. In Fig. 8, the rules are represented in form of a table, with the string segment that is to be modelled placed in the first column 801, a model tag, here in form of the string segment that is to be modelled placed between two "++" characters, is placed in the second column 802. The last column 805 identifies the central character that is modelled by the model, with the third column 803 identifying the position at which the central character is located in the string segment, and the fourth column 804 identifying the length of the central character sequence, which is always one in the here depicted case (only one central character). The first three lines are the rules that are applied when processing the character "-". Line 813 associates a monophone model with the string segment "-", which in this case is also the central character. As can be seen from line 811, a longer model exists for a string segment comprising the character "-". When going from the shorter model of line 813 to the longer model of line 811, an intermediate phonetic string segment "-?" occurs. As no model exists for this string segment, the bridge rule of line 812 is provided for this intermediate phonetic string segment. The bridge rule of line 812 associates the string segment "-?" with an empty model "++". The bridge model of line 812 thus indicates that the longer model of line 811 exists. If the compiling unit finds a bride rule for a string segment, it knows that there may be longer models, and it will continue searching the string and will finally find the longer model "-?Å". The models of this example always model one character of the phonetic string, i.e. the length of the central character sequence of column 804 is always one. In another embodiment, longer central character sequences may be modelled.

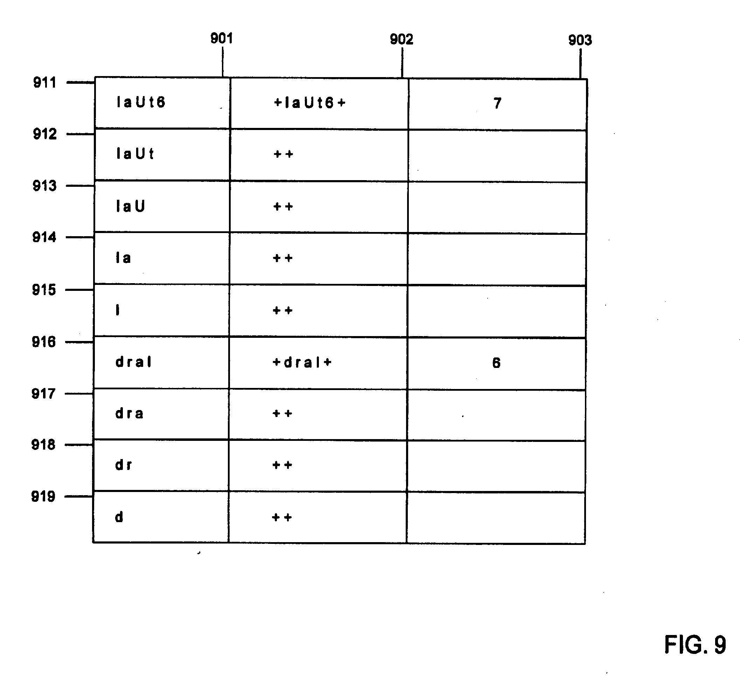

Bridge rules are similarly used in the rules for whole-word processing. Fig. 9 shows an example of such whole-word rules. The rules are presented in the form of a table, with the first column 901 containing the string segment that is associated with a model of which the model tag is identified in the second column 902. Again, the string segment placed between two +-signs is used as a model tag. The third column 903 contains the length of the model, which is the length of the string segment including the +-signs. Line 911 contains a rule for the association of a whole-word model with the string segment "laUt6", which stands for the German text string "lauter". Line 916 contains a rule that assigns a whole-word model to the phonetic string segment "draI", which corresponds to the German text string "drei". Lines 912-915 end 917-919 contain bridge rules. When a phonetic string containing the two string segments of lines 911 and 916 is whole-word-processed, the rules for the string segments would not be found without the bridge rules. Without bridge rules, no model would be found for the string segment "1", and accordingly, whole-word processing of this character would be stopped. Yet using the bridge rules string segments of increasing length starting with the character "1" will be checked until finally the string segment of line 911 associated with the model is found. The model length comprised in column 903 is useful when two models are found for a portion of the phonetic string. If this is the case, the longer model will be inserted or stored.

It should be understood that these are only examples of rules, and that the rules may take on other forms, models may be designated by other model tags, and more or less properties may be assigned to the string segments. Columns, 803, 804, 805 and 903 are optional, and the rules may also be arranged in any other way suitable for processing the phonetic string characterwise. Further rules are provided for the pre-processing and the p2p processing, such as rules for the transcription of the trained monophones or prosody characters. The rules may be stored as hash tables with phonetic string segments as keys. The key may then be transformed into a number using a hash function that is used to index the rules in the hash table.

Several ways of providing and searching rules are known to a person skilled in the art, and it is not important which way the rules are searched or organized.

It should also be clear that the set of rules may contain a plurality of rules for monophones, biphones, triphones, or longer phonetic segments. These models may only model one central character. In contrast, whole-word models may model a plurality of phonetic characters. As an example, the speech recognition system may use 25 whole-word models, 50 monophone models and 1500 triphone models. Additionally, a number of models for diphthongs and biphones are provided. For multi-lingual speech recognition, several thousand rules may be provided.

With the above-described method, data that is added to a system comprising a speech recognition system can be prepared for speech recognition in a short amount of time. The data is modelled with model sequences in a reliable way. The model sequences are optimal in the sense that longer models are preferred. The method thus enables speech recognition of data that has just been added to the system.

## Claims

1. Method for preparing data for speech recognition, the data being provided in the form of a phonetic string, wherein the phonetic string is modelled with a sequence of models by processing the phonetic string comprising at least one character characterwise,
the processing of a character comprising:
• checking for at least one phonetic string segment comprising said character if a model exists for said phonetic string segment in a set of rules associating phonetic string segments with models,
• if a model exists for a checked phonetic string segment, assigning said model to a character comprised in said phonetic string segment if no longer model is already assigned to said character,
wherein the models assigned to the characters form a model sequence representing the phonetic string,
**characterized in that**
the set of rules comprises bridge rules that associate a phonetic string segment with an empty model, wherein bridge rules are provided for phonetic string segments that occur when going from a shorter phonetic string segment associated with a model to a longer phonetic string segment associated with another model by adding single characters.

2. Method according to claim 1, **characterized in that** for each character, phonetic string segments of increasing length are checked, starting with a segment comprising only the character itself, with segments of increasing length being formed by extending the segment with the next character in the phonetic string, until no model is found for the segment or the end of the phonetic string is reached.

3. Method according to claim 1 or 2, **characterized in that** a model is associated with a central character in the set of rules, wherein of the models found for phonetic string sequences comprising a particular character, the longest model associated with a central character corresponding to said particular character is assigned to said particular character.

4. Method according to any of the preceding claims, **characterized in that** model tags designate the models in the set of rules, wherein a model tag for a model assigned to a character is stored in a model string at a position corresponding to the position of the character in the phonetic string in order to obtain a string with a sequence of model tags representing the phonetic string.

5. Method according to any of the preceding claims, **characterized in that** the models comprise hidden Markov models.

6. Method according to any of the preceding claims, **characterized in that** only models that are not empty models are assigned to characters.

7. Method according to any of the preceding claims, **characterized by** further comprising the step of pre-processing the phonetic string before the characters in the phonetic string are processed.

8. Method according to claim 7, **characterized in that** the step of pre-processing the phonetic string comprises the step of analyzing the phonetic string for language tags and, if a language tag is found, providing a set of rules associated with the language tag.

9. Method according to claim 7 or 8, **characterized in that** the step of pre-processing the phonetic string comprises the step of substituting or deleting predetermined characters in the phonetic string.

10. Method according to any of claims 7-9, **characterized in that** the step of pre-processing the phonetic string comprises the steps of identifying separators in the phonetic string and storing their string positions.

11. Method according to any of the preceding claims, **characterized by** further comprising the step of assigning whole-word models to phonetic string segments comprised in the phonetic string.

12. Method according to claim 11, **characterized in that** a set of whole-word rules is provided, comprising rules for the association of phonetic string segments with whole-word models and bridge rules.

13. Method according to any of the preceding claims, **characterized in that** characters in the phonetic string are substituted according to predetermined rules before the characters in the phonetic string are processed.

14. Method according to claim 13, **characterized in that** the predetermined rules comprise rules for the substitution of SAMPA monophones having the form of two ASCII characters by one UTF-8 character and/or for the substitution of SAMPA diphthongs by one UTF-8 character.

15. Method according to any of the preceding claims, **characterized by** further comprising the steps of providing the data in form of a text string and transcribing the text string to the phonetic string.

16. Method according to any of the preceding claims, **characterized by** further comprising the step of recognizing spoken language by detecting an utterance of a person, deriving a sequence of feature vectors from the detected utterance and finding a model sequence least distant from said sequence of feature vectors, wherein by finding said model sequence, speech is recognized.

17. Speech recognition system, comprising
a data providing unit (101) providing data in the form of a phonetic string comprising at least one character,
a set of rules associating phonetic string segments with models,
a compiling unit (109) for modelling the phonetic string with a sequence of models,
wherein the compiling unit (109) is formed so as to process the phonetic string characterwise,
the processing of a character comprising:
• checking for at least one phonetic string segment comprising said character if a model exists for said phonetic string segment in the set of rules,
• if a model exists for a checked phonetic string segment, assigning said model to a character comprised in said phonetic string segment if no longer model is already assigned to said character,
wherein the models assigned to the characters form a model sequence representing the phonetic string,
**characterized in that**
the set of rules comprises bridge rules that associate a phonetic string segment with an empty model, wherein bridge rules are provided for phonetic string segments that occur when going from a shorter phonetic string segment associated with a model to a longer phonetic string segment associated with another model by adding single characters.

18. Speech recognition system according to claim 17, **characterized by** further comprising a pre-processing unit (104) for pre-processing the phonetic string.

19. Speech recognition system according to any of claims 17-18, **characterized by** further comprising a whole-word processing unit (107) for assigning whole-word models to phonetic string segments comprised in the phonetic string.

20. Speech recognition system according to any of claims 17-19, **characterized by** further comprising a p2p transcription unit (108) substituting characters in the phonetic string according to predetermined rules.

21. Speech recognition system according to any of claims 17-20, **characterized by** further comprising a rule-file (105) providing the set of rules.

22. Speech recognition system according to any of claims 17-21, **characterized by** further comprising a rule-file (105) providing a set of rules for a p2p transcription and/or for a whole-word processing and/or for a pre-processing of the phonetic string.

23. Speech recognition system according to any of claims 17-22, **characterized by** further comprising a microphone (110) and a recording unit (111) for recording a speech signal, a speech compiling unit (112) for extracting a feature vector sequence from the speech signal, a processing unit (113) for finding a model sequence which has the highest probability of generating the derived feature vector sequence, and a control unit (114) for executing a function associated with the data to which the model sequence found is assigned.

24. Speech recognition system according to any of claims 17-23, **characterized in that** the system is formed so as to perform any of the methods of claims 1-16.

25. Computer program product that can be loaded into the internal memory of a computer, said product comprising software code portions for performing any of the methods of claims 1-16 when the product is executed.

26. Speech recognition system according to any of claims 17-24, further comprising a data carrier with data being stored on the data carrier, said data comprising rules for the association of phonetic string segments with models and/or whole-word models, said data further comprising bridge rules.

27. Electronically readable data carrier with stored electronically readable control information configured such that when using the data carrier in a computer system, the control information carries out the method of one of claims 1-16.

## Patentansprüche

1. Verfahren zum Vorbereiten von Daten für eine Spracherkennung, wobei die Daten in Form einer phonetischen Folge bereitgestellt werden, wobei die phonetische Folge mit einer Sequenz von Modellen modelliert wird, indem die phonetische Folge, die mindestens einen Charakter umfasst, charakterweise verarbeitet wird,
wobei das Verarbeiten eines Charakters umfasst:
- Überprüfen für mindestens ein Segment der phonetischen Folge, das den Charakter umfasst, ob ein Modell für dieses Segment der phonetischen Folge in einem Satz von Regeln existiert, der phonetische Folgensegmente mit Modellen assoziiert,
- wenn ein Modell für ein überprüftes Segment der phonetischen Folge existiert, Zuweisen des Modells zu einem Charakter, der in dem Segment der phonetischen Folge umfasst ist, wenn kein längeres Modell bereits diesem Charakter zugewiesen ist,
wobei die Modelle, die den Charakteren zugewiesen sind, eine Modellsequenz bilden, die die phonetische Folge repräsentiert,
**dadurch gekennzeichnet, dass**
der Satz von Regeln Brückenregeln umfasst, die ein phonetisches Folgensegment mit einem leeren Modell assoziieren, wobei Brückenregeln für phonetische Folgensegmente bereitgestellt werden, die auftreten, wenn man von einem kürzeren phonetischen Folgensegment, das mit einem Modell assoziiert ist, durch Hinzufügen einzelner Charaktere zu einem längeren phonetischen Folgensegment gelangt, das mit einem anderen Modell assoziiert ist.

2. Verfahren nach Anspruch 1, **dadurch gekennzeichnet, dass** für jeden Charakter Segmente der phonetischen Folge mit zunehmender Länge überprüft werden, beginnend mit einem Segment, das nur den Charakter selbst umfasst, wobei Segmente mit zunehmender Länge gebildet werden, indem das Segment mit dem nächsten Charakter der phonetischen Folge erweitert wird, bis kein Modell mehr für das Segment gefunden wird oder das Ende der phonetischen Folge erreicht ist.

3. Verfahren nach Anspruch 1 oder 2, **dadurch gekennzeichnet, dass** ein Modell in dem Satz von Regeln mit einem zentralen Charakter assoziiert ist, wobei von den Modellen, die für Segmente der phonetischen Folge gefunden werden, die einen bestimmten Charakter umfassen, das längste Modell, das mit einem zentralen Charakter assoziiert ist, der dem bestimmten Charakter entspricht, dem bestimmten Charakter zugewiesen wird.

4. Verfahren nach einem der vorstehenden Ansprüche, **dadurch gekennzeichnet, dass** Modellkennzeichnungen die Modelle in dem Satz von Regeln bezeichnen, wobei eine Modellkennzeichnung für ein Modell, das einem Charakter zugewiesen wird, in einer Modellfolge an einer Position gespeichert wird, die der Position des Charakters in der phonetischen Folge entspricht, um eine Folge mit einer Sequenz von Modellkennzeichnungen zu erhalten, die die phonetische Folge repräsentiert.

5. Verfahren nach einem der vorstehenden Ansprüche, **dadurch gekennzeichnet, dass** die Modelle Hidden-Markov-Modelle umfassen.

6. Verfahren nach einem der vorstehenden Ansprüche, **dadurch gekennzeichnet, dass** nur Modelle, die keine leeren Modelle sind, Charakteren zugewiesen werden.

7. Verfahren nach einem der vorstehenden Ansprüche, das des Weiteren den Schritt eines Vorverarbeitens der phonetischen Folge umfasst, bevor die Charaktere in der phonetischen Folge verarbeitet werden.

8. Verfahren nach Anspruch 7, **dadurch gekennzeichnet, dass** der Schritt der Vorverarbeitung der phonetischen Folge den Schritt eines Analysierens der phonetischen Folge auf Sprachkennzeichnungen und, wenn eine Sprachkennzeichnung gefunden wurde, das Bereitstellen eines Satzes von Regeln, der mit der Sprachkennzeichnung assoziiert ist, umfasst.

9. Verfahren nach Anspruch 7 oder 8, **dadurch gekennzeichnet, dass** der Schritt des Vorverarbeitens der phonetischen Folge den Schritt eines Ersetzens oder Löschens vorbestimmter Charaktere in der phonetischen Folge umfasst.

10. Verfahren nach einem der Ansprüche 7-9, **dadurch gekennzeichnet, dass** der Schritt des Vorverarbeitens der phonetischen Folge den Schritt eines Identifizierens von Separatoren in der phonetischen Folge und eines Speicherns deren Positionen in der Folge umfasst.

11. Verfahren nach einem der vorstehenden Ansprüche, **dadurch gekennzeichnet, dass** es des Weiteren den Schritt eines Zuweisens von Ganz-Wort-Modellen zu phonetischen Folgensegmenten umfasst, die in der phonetischen Folge umfasst sind.

12. Verfahren nach Anspruch 11, **dadurch gekennzeichnet, dass** ein Satz von Ganz-Wort-Regeln bereitgestellt wird, der Regeln für die Assoziierung von phonetischen Folgensegmenten mit Ganz-Wort-Modellen und Brückenregeln umfasst.

13. Verfahren nach einem der vorstehenden Ansprüche, **dadurch gekennzeichnet, dass** Charaktere in der phonetischen Folge gemäß vorbestimmten Regeln ersetzt werden, bevor die Charaktere in der phonetischen Folge verarbeitet werden.

14. Verfahren nach Anspruch 13, **dadurch gekennzeichnet, dass** die vorbestimmten Regeln Regeln für die Ersetzung von SAMPA-Monophonen, die die Form von zwei ASCII-Charakteren aufweisen, durch einen UTF-8-Charakter und/oder zum Ersetzen von SAMPA-Diphtongen durch einen UTF-8-Charakter umfassen.

15. Verfahren nach einem der vorstehenden Ansprüche, **dadurch gekennzeichnet, dass** es des Weiteren die Schritte eines Bereitstellens der Daten in Form einer Textfolge und eines Transkribierens der Textfolge in die phonetische Folge umfasst.

16. Verfahren nach einem der vorstehenden Ansprüche, **dadurch gekennzeichnet, dass** es des Weiteren den Schritt eines Erkennens von gesprochener Sprache durch Detektieren einer Äußerung einer Person, Ableiten einer Sequenz von Merkmalsvektoren von der detektierten Äußerung und Auffinden einer Modellsequenz, die die geringste Distanz von der Sequenz von Merkmalsvektoren aufweist, umfasst, wobei durch Auffinden der Modellsequenz Sprache erkannt wird.

17. Spracherkennungssystem, umfassend
eine Datenbereitstellungseinheit (101), die Daten in der Form einer phonetischen Folge, die mindestens einen Charakter umfasst, bereitstellt,
einen Satz von Regeln, der phonetische Folgensegmente mit Modellen assoziiert,
eine Kompelliereinheit (109) zum Modellieren der phonetischen Folge mit einer Sequenz von Modellen,
wobei die Kompelliereinheit (109) ausgestaltet ist, um die phonetische Folge charakterweise zu verarbeiten,
wobei das Verarbeiten eines Charakters umfasst:
Überprüfen für mindestens ein Segment der phonetischen Folge,
das den Charakter umfasst, ob ein Modell für das Segment der phonetischen Folge in dem Satz von Regeln existiert,
wenn ein Modell für ein überprüftes Segment der phonetischen Folge existiert, Zuweisen des Modells zu einem Charakter, der in dem Segment der phonetischen Folge umfasst ist, wenn kein längeres Modell diesem Charakter bereits zugewiesen ist,
wobei die Modelle, die den Charakteren zugewiesen sind, eine Modellsequenz bilden, die die phonetische Folge repräsentieren,
**dadurch gekennzeichnet, dass**
der Satz von Regeln Brückenregeln umfasst, die ein phonetisches Folgensegment mit einem leeren Modell assoziieren, wobei Brückenregeln bereitgestellt werden für phonetische Folgensegmente, die auftreten, wenn von einem kürzeren phonetischen Folgensegment, das mit einem Modell assoziiert ist,
durch Hinzufügen einzelner Charaktere zu einem längeren phonetischen Folgensegment, das mit einem anderen Modell assoziiert ist, übergegangen wird.

18. Spracherkennungssystem nach Anspruch 17, **dadurch gekennzeichnet, dass** es des Weiteren einer Vorverarbeitungseinheit (104) zum Vorverarbeiten der phonetischen Folge umfasst.

19. Spracherkennungssystem nach einem der Ansprüche 17-18, **dadurch gekennzeichnet, dass** es des Weiteren eine Ganz-Wort-Verarbeitungseinheit (107) zum Zuweisen von Ganz-Wort-Modellen zu phonetischen Folgensegmenten, die in der phonetischen Folge umfasst sind, umfasst.

20. Spracherkennungssystem nach einem der Ansprüche 17-19, **dadurch gekennzeichnet, dass** es des Weiteren eine p2p-Transkriptionseinheit (108) umfasst, die gemäß vorbestimmten Regeln Charaktere in der phonetischen Folge ersetzt.

21. Spracherkennungssystem nach einem der Ansprüche 17-20, **dadurch gekennzeichnet, dass** es des Weiteren eine Regel-Datei (105) umfasst, die den Satz von Regeln bereitstellt.

22. Spracherkennungssystem nach einem der Ansprüche 17-21, **dadurch gekennzeichnet, dass** es des Weiteren eine Regel-Datei (105) umfasst, die einen Satz von Regeln für eine p2p-Transkription und/oder für eine Ganz-Wort-Verarbeitung und/oder für eine Vorverarbeitung der phonetischen Folge bereitstellt.

23. Spracherkennungssystem nach einem der Ansprüche 17-22, **dadurch gekennzeichnet, dass** es des Weiteren ein Mikrophon (210) und eine Aufnahmeeinheit (111) zur Aufnahme eines Sprachsignals, eine Sprachkompelliereinheit (112) zum Extrahieren einer Merkmalsvektorsequenz von dem Sprachsignal, eine Verarbeitungseinheit (113) zum Auffinden einer Modellsequenz, die die höchste Wahrscheinlichkeit aufweist, die abgeleitete Merkmalsvektorsequenz zu erzeugen, und eine Steuereinheit (114) zum Ausführen einer Funktion, die mit den Daten assoziiert ist, welchen die aufgefundene Modellsequenz zugewiesen ist, umfasst.

24. Spracherkennungssystem nach einem der Ansprüche 17-23, **dadurch gekennzeichnet, dass** das System zum Durchführen eines Verfahrens nach einem der Ansprüche 1-16 ausgestaltet ist.

25. Computerprogrammprodukt, das in den internen Speicher eines Computers geladen werden kann, wobei das Produkt Softwarecodebereiche zum Durchführen eines der Verfahren nach Ansprüchen 1-16 umfasst, wenn das Produkt ausgeführt wird.

26. Spracherkennungssystem nach einem der Ansprüche 17-24, des Weiteren einen Datenträger umfassend, wobei Daten auf dem Datenträger gespeichert sind, wobei die Daten Regeln für die Assoziierung von phonetischen Folgensegmenten mit Modellen und/oder Ganz-Wort-Modellen umfassen, wobei die Daten des Weiteren Brückenregeln umfassen.

27. Elektronisch lesbarer Datenträger mit gespeicherten elektronisch lesbaren Steuerinformationen, die derart konfiguriert sind, dass, wenn der Datenträger in einem Computersystem verwendet wird, die Steuerinformationen das Verfahren nach einem der Ansprüche 1-16 ausführen.

## Revendications

1. Procédé de préparation de données pour une reconnaissance de parole, les données étant fournies sous forme d'une chaîne phonétique, dans lequel la chaîne phonétique est modélisée avec une séquence de modèles par traitement, caractère par caractère, de la chaîne phonétique comprenant au moins un caractère,
le traitement d'un caractère comprenant:
• vérifier, pour au moins un segment de chaîne phonétique comprenant ledit caractère, s'il existe un modèle pour ledit segment de chaîne phonétique dans un ensemble de règles associant des segments de chaîne phonétique à des modèles,
• s'il existe un modèle pour un segment de chaîne phonétique vérifié, attribuer ledit modèle à un caractère compris dans ledit segment de chaîne phonétique si aucun modèle plus long n'est déjà attribué audit caractère,
dans lequel les modèles attribués aux caractères forment une séquence de modèles représentant la chaîne phonétique, **caractérisé en ce que**
l'ensemble de règles comprend des règles "pont" qui associent un segment de chaîne phonétique à un modèle vide, dans lequel des règles "pont" sont fournies pour des segments de chaîne phonétiques qui apparaissent lorsqu'on va d'un segment de chaîne phonétique plus court associé à un modèle vers un segment de chaîne phonétique plus long associé à un autre modèle, par addition de caractères individuels.

2. Procédé selon la revendication 1, **caractérisé en ce que**, pour chaque caractère, des segments de chaîne phonétique de longueur croissante sont vérifiés, commençant par un segment comprenant seulement le caractère lui-même, des segments de longueur croissante étant formés par extension du segment avec le caractère suivant dans la chaîne phonétique jusqu'à ce qu'aucun modèle n'est trouvé pour le segment ou lorsqu'on arrive à la fin de la chaîne phonétique.

3. Procédé selon la revendication 1 ou 2, **caractérisé en ce qu'**un modèle est associé à un caractère central dans l'ensemble de règles, dans lequel, parmi les modèles trouvés pour des séquences de chaîne phonétique comprenant un caractère particulier, le modèle le plus long associé à un caractère central correspondant audit caractère particulier est attribué audit caractère particulier.

4. Procédé selon l'une quelconque des revendications précédentes, **caractérisé en ce que** des étiquettes de modèle désignent les modèles dans l'ensemble de règles, dans lequel une étiquette de modèle pour un modèle attribué à un caractère est stockée dans une chaîne de modèles à un emplacement correspondant à l'emplacement du caractère dans la chaîne phonétique pour obtenir une chaîne avec une séquence d'étiquettes de modèle représentant la chaîne phonétique.

5. Procédé selon l'une quelconque des revendications précédentes, **caractérisé en ce que** les modèles comprennent des modèles cachés de Markov.

6. Procédé selon l'une quelconque des revendications précédentes, **caractérisé en ce que** seulement des modèles qui ne sont pas des modèles vides sont attribués à des caractères.

7. Procédé selon l'une quelconque des revendications précédentes, **caractérisé en ce qu'**il comprend en outre l'étape de prétraiter la chaîne phonétique avant de traiter des caractères dans la chaîne phonétique.

8. Procédé selon la revendication 7, **caractérisé en ce que** l'étape de prétraiter la chaîne phonétique comprend l'étape d'analyser la chaîne phonétique au sujet d'étiquettes de langage, et si une étiquette de langage est trouvée, de fournir un ensemble de règles associé à l'étiquette de langage.

9. Procédé selon la revendication 7 ou 8, **caractérisé en ce que** l'étape de prétraiter la chaîne phonétique comprend l'étape de substituer ou de supprimer des caractères prédéterminés dans la chaîne phonétique.

10. Procédé selon l'une quelconque des revendications 7-9, **caractérisé en ce que** l'étape de prétraiter la chaîne phonétique comprend les étapes d'identifier des séparateurs dans la chaîne phonétique et de stocker leurs emplacements dans la chaîne.

11. Procédé selon l'une quelconque des revendications précédentes, **caractérisé en ce qu'**il comprend en outre l'étape d'attribuer des modèles de mot complet aux segments de chaîne phonétique compris dans la chaîne phonétique.

12. Procédé selon la revendication 11, **caractérisé en ce qu'**un ensemble de règles de mot complet est fourni, comprenant des règles pour associer des segments de chaîne phonétique à des modèles de mot complet et des règles "pont".

13. Procédé selon l'une quelconque des revendications précédentes, **caractérisé en ce que** des caractères dans la chaîne phonétique sont substitués selon des règles prédéterminées avant de traiter les caractères dans la chaîne phonétique.

14. Procédé selon la revendication 13, **caractérisé en ce que** les règles prédéterminées comprennent des règles pour la substitution de monophones SAMPA ayant la forme de deux caractères ASCII par un caractère UTF-8 et/ou pour la substitution de diphtongues SAMPA par un caractère UTF-8.

15. Procédé selon l'une quelconque des revendications précédentes, **caractérisé en ce qu'**il comprend en outre les étapes de fournir les données sous forme d'une chaîne de texte et de transcrire la chaîne de texte dans la chaîne phonétique.

16. Procédé selon l'une quelconque des revendications précédentes, **caractérisé en ce qu'**il comprend en outre l'étape de reconnaître du langage parlé en détectant un énoncé d'une personne, de dériver une séquence de vecteurs de caractéristiques de l'énoncé détecté et de trouver une séquence de modèles la moins distante de ladite séquence de vecteurs de caractéristiques, dans lequel de la parole est reconnue en trouvant ladite séquence de modèle.

17. Système de reconnaissance de parole, comprenant une unité de fourniture de données (101) fournissant des données sous forme d'une chaîne phonétique comprenant au moins un caractère,
un ensemble de règles associant des segments de chaîne phonétique à des modèles,
une unité de compilation (109) pour modéliser la chaîne phonétique avec une séquence de modèles,
dans lequel l'unité de compilation (109) est formée pour traiter la chaîne phonétique caractère par caractère,
le traitement d'un caractère comprenant:
• vérifier, pour au moins un segment de chaîne phonétique comprenant ledit caractère, s'il existe un modèle pour ledit segment de chaîne phonétique dans l'ensemble de règles,
• s'il existe un modèle pour un segment de chaîne phonétique vérifié, attribuer ledit modèle à un caractère compris dans ledit segment de chaîne phonétique si aucun modèle plus long n'est déjà attribué audit caractère,
dans lequel les modèles attribués aux caractères forment une séquence de modèles représentant la chaîne phonétique, **caractérisé en ce que**
l'ensemble de règles comprend des règles "pont" qui associent un segment de chaîne phonétique à un modèle vide, dans lequel des règles "pont" sont fournies pour des segments de chaîne phonétique qui apparaissent lorsqu'on va d'un segment de chaîne phonétique plus court associé à un modèle vers un segment de chaîne phonétique plus long associé à un autre modèle, par addition de caractères uniques.

18. Système de reconnaissance de parole selon la revendication 17, **caractérisé en ce qu'**il comprend en outre une unité de prétraitement (104) pour prétraiter la chaîne phonétique.

19. Système de reconnaissance de parole selon l'une quelconque des revendications 17-18, **caractérisé en ce qu'**il comprend en outre une unité de traitement de mot complet (107) pour attribuer des modèles de mot complet à des segments de chaîne phonétique compris dans la chaîne phonétique.

20. Système de reconnaissance de parole selon l'une quelconque des revendications 17-19, **caractérisé en ce qu'**il comprend en outre une unité de transcription p2p (108) substituant des caractères dans la chaîne phonétique selon des règles prédéterminées.

21. Système de reconnaissance de parole selon l'une quelconque des revendications 17-20, **caractérisé en ce qu'**il comprend en outre un fichier de règles (105) fournissant l'ensemble de règles.

22. Système de reconnaissance de parole selon l'une quelconque des revendications 17-21, **caractérisé en ce qu'**il comprend en outre un fichier de règles (105) fournissant un ensemble de règles pour une transcription p2p et/ou pour un traitement de mot complet et/ou pour un prétraitement de la chaîne phonétique.

23. Système de reconnaissance de parole selon l'une quelconque des revendications 17-22, **caractérisé en ce qu'**il comprend en outre un microphone (110) et une unité d'enregistrement (111) pour enregistrer un signal de parole, une unité de compilation de parole (112) pour extraire du signal de parole une séquence de vecteurs de caractéristique, une unité de traitement (113) pour trouver une séquence de modèles qui a la plus haute probabilité de générer la séquence de vecteurs de caractéristique dérivée, et une unité de contrôle (114) pour exécuter une fonction associée aux données auxquelles la séquence de modèles trouvée est attribuée.

24. Système de reconnaissance de parole selon l'une quelconque des revendications 17-23, **caractérisé en ce que** le système est formé pour exécuter l'un quelconque des procédés des revendications 1-16.

25. Produit programme ordinateur qui peut être chargé dans la mémoire interne d'un ordinateur, ledit produit comprenant des portions de code logiciel pour exécuter l'un quelconque des procédés des revendications 1-16, lorsque le produit est exécuté.

26. Système de reconnaissance de parole selon l'une quelconque des revendications 17-24, comprenant en outre un support de données, des données étant stockées sur le support de données, lesdites données comprenant des règles pour l'association de segments de chaîne phonétique à des modèles et/ou des modèles de mot complet, lesdites donnés comprenant en outre des règles "pont".

27. Support de données lisible électroniquement comportant une information de contrôle stockée lisible électroniquement configurée de telle manière que lorsqu'on utilise le support de données dans un système d'ordinateur, l'information de contrôle effectue le procédé d'une des revendications 1-16.
